# EUROPEAN PATENT APPLICATION

(11) **EP 2 068 248 A1**
(43) Date of publication of application: **10.06.2009**
(21) Application number: 07791615.3
(22) Date of filing: 31.07.2007
(51) Int. Cl.: G06F 12/00

(54) **CONTENTS MANAGING DEVICE**

(30) Priority: 28.09.2006 JP 2006263989
(71) Applicant: Brother Kogyo Kabushiki Kaisha, Nagoya-shi, Aichi-ken (JP)
(72) Inventor: SUZUKI, Hiroakic/o BROTHER KOGYO KABUSHIKI KAISHA, Nagoya-shi Aichi;4678561 (JP)
(74) Representative: Kuhnen & Wacker
(86) International application number: PCT/JP2007/064930
(87) International publication number: WO 2008/038457

(57) **Abstract**

In a case where a manually acquired content item to be stored cannot be stored, all of automatic content items that satisfies a first condition (already read) is deleted, all of the automatic content items that satisfies a second condition (elapsing of a specified period) is deleted, and the automatic content item that satisfies a third condition (oldest) is deleted until available capacity for storing the manually acquired content item can be allocated. In a case where automatically acquired content item to be stored cannot be stored, all of the automatic content items that satisfies the first condition (already read) is deleted, all of the automatic content items that satisfies the second condition (elapsing of the specified period) is deleted, and the automatic content item that satisfies the third condition is deleted until the available capacity to store the automatically acquired content item can be allocated.

## Description

### Technical Field

The present invention relates to a content management apparatus and a content management program, more specifically, a content management apparatus that is capable of acquiring content manually and automatically and a content management program that may operate in the content management apparatus.

### Background Art

Conventionally, various types of content such as text, music, video, and the like are stored in a mobile terminal or a personal computer and a user views or listens to these types of content on the mobile terminal. Generally, these types of content may be acquired from another apparatus by connecting to a network such as the Internet, a LAN, or the like. In the acquisition of the content, a method of acquiring the content manually and a method of acquiring the content automatically are used. The method of acquiring the content manually is an active acquisition method in which the user searches on the network, selects the desired content, and stores the content into the user's own apparatus (a mobile terminal, a personal computer, or the like).

The method of acquiring the content automatically is a positive acquisition method in which the content can be acquired automatically by performing a setting or a registration in advance. For example, one method uses an RSS reader (RSS being an acronym for one, two, and all of RDF Site Summary, Rich Site Summary, and Really Simple Syndication). A URL that indicates RSS format data for a Web site is registered in advance in the RSS reader. Thereafter, the RSS reader reads the RSS format data at specified intervals (for example, every ten minutes) and in a case where the RSS format data has changed since it was last read, information is downloaded from the Web site. The method of acquiring the content automatically may also include, for example, a method in which the user registers with the publisher of an e-mail magazine an electronic mail address through which the user's terminal can receive electronic mail, such that the terminal receives e-mail that the publisher transmits. These sorts of methods of acquiring the content automatically may have an advantage in that they can automatically acquire updated and newly created content. Furthermore, the content may be known in close to a real-time state by shortening the intervals at which the RSS format data is read and the e-mail server is checked for received e-mail.

A problem may exist in that, when the content is being acquired in this manner, only a limited amount of the content can be utilized if the storage capacity of the apparatus that is acquiring the content is small. Accordingly, a content management system has been proposed that is the invention described in Patent Document 1. In the content management system described in Patent Document 1, a command (a download request) is issued manually to the effect that content that is stored in a second information processing apparatus (an apparatus that provides the content) will be downloaded to a first information processing apparatus (an apparatus that acquires the content), and the content is downloaded and stored in the first information processing apparatus. Note that a list of the content items for which the download request was issued is stored in the first information processing apparatus. Further, in a case where the download cannot be performed because the storage capacity of the first information processing apparatus is insufficient, if the volume of the content item that is played back in the first information processing apparatus is greater than the volume of the content item that the user wants to acquire, the first information processing apparatus connects to the second information processing apparatus, deletes the content item that has been played back, issues a download request for the content item that has not yet been downloaded, and acquires that content. In other words, automatically deleting the content item that has been played back (is no longer needed) makes storage capacity available for the content that the user tried to acquire manually but could not acquire due to insufficient capacity, thus allowing the content to be acquired later.
Patent Document 1: Japanese Laid-Open Patent Publication No. 2004-46497

In a terminal that stores the content, such as a mobile terminal, a personal computer, or the like, the storage capacity is limited. In the content management system described in Patent Document 1, a method is proposed for dealing with a case where the method of acquiring the content automatically cannot acquire the content due to insufficient capacity. The method, however, takes into account only the case of acquiring the content manually, and dealing with an apparatus that acquires the content both manually and automatically is not considered.

In an apparatus that acquires the content both manually and automatically, a problem may arise in that, if a large amount of content is acquired and stored manually, then when content is acquired automatically, sufficient storage capacity is not available for storing the content, so the content cannot be stored. One advantage of acquiring content automatically may be that designated content may be acquired automatically, but this may be meaningless if the content cannot be stored due to insufficient storage capacity. In other words, a problem may exist in that the automatically acquired content cannot be stored, even though the user has made the setting for automatic acquisition because the user wants to store the designated content in a content management apparatus without making any special effort to do so.

### Disclosure of the Invention

It is an object of the present disclosure, in order to solve the problems described above, to provide a content management apparatus that is capable of acquiring content manually and automatically from another apparatus and that allocates a storage area when the content is acquired automatically, as well as a content management program that operates in the content management apparatus.

According to the present disclosure, there is provided a content management apparatus that connects to another apparatus storing content items, that is provided with transmission means for transmitting information to the other apparatus and receiving means for receiving information from the other apparatus, that acquires a content item from the other apparatus, and that stores the content item into content storage means for storing content items, the content management apparatus characterized by comprising manual acquisition means for designating a content item stored in the other apparatus and acquiring the designated content item by receiving the designated content item from the other apparatus via the receiving means, or designating and acquiring a content item stored in storage means of the content management apparatus other than the content storage means, automatic acquisition means for acquiring, by receiving via the receiving means, at least one of a content item that satisfies a specified acquisition condition and that is transmitted from the other apparatus in response to request information requesting transmission of the content and a content item that is transmitted autonomously from the other apparatus, or acquiring a created content item that is created in the content management apparatus and that satisfies the specified acquisition condition, storage capacity determination means for, in a case where the content item acquired by the manual acquisition means is to be stored into the content storage means, determining whether a volume that is obtained by summing a volume of manual content and a volume of the acquired content item exceeds a maximum manual storage capacity, the manual content being at least one manual content item that has already been acquired by the manual acquisition means and stored in the content storage means, the maximum manual storage capacity being a capacity that permits storage of the manual content in the content storage means, manual content storage control means for storing the acquired content item, as the manual content item, into the content storage means only in a case where it is determined by the storage capacity determination means that the maximum manual storage capacity will not be exceeded, message output control means for, in a case where it is determined by the storage capacity determination means that the maximum manual storage capacity will be exceeded, outputting a message that requests deletion of the manual content stored in the content storage means, automatic storage determination means for determining whether or not the content item acquired by the automatic acquisition means can be stored into the content storage means, automatic content storage control means for, in a case where it is determined by the automatic storage determination means that the content item can be stored, storing the content item acquired by the automatic acquisition means, as an automatic content item of automatic content, into the content storage means, and first automatic deletion and storage control means for, in a case where it has been determined by the automatic storage determination means that the content item cannot be stored, deleting at least one automatic content item stored in the content storage means in accordance with a first deletion condition, and storing the content item acquired by the automatic acquisition means into the content storage means.

### Brief Description of the Drawings

FIG. 1 is a front view of a content display device 1.
FIG. 2 is an explanatory figure 500 that is shown in order to explain a storage capacity for manual content in a content storage area 300.
FIG. 3 is an explanatory figure 501 that shows a state in which automatic content is stored whose volume is greater than a difference between a total capacity and the storage capacity for manual content.
FIG. 4 is an explanatory figure 502 that shows a state in which manual content is stored whose volume is greater than the storage capacity for manual content, a state that is not permitted in a present embodiment.
FIG. 5 is an explanatory figure 503 that shows an example of a state in which manually acquired content cannot be stored, even if an attempt is made to store it.
FIG. 6 is an explanatory figure 504 that shows an example of a state in which manually acquired content cannot be stored, even if an attempt is made to store it.
FIG. 7 is an explanatory figure 505 that shows an example of a state in which automatically acquired content cannot be stored, even if an attempt is made to store it.
FIG. 8 is an explanatory figure 506 that shows an example of a state in which automatically acquired content cannot be stored, even if an attempt is made to store it.
FIG. 9 is an explanatory figure 507 that shows an example of a state in which automatically acquired content cannot be stored, even if an attempt is made to store it.
FIG. 10 is an explanatory figure 508 that shows an example of a state in which automatically acquired content cannot be stored, even if an attempt is made to store it.
FIG. 11 is a schematic figure that shows an electrical configuration of a PC 9.
FIG. 12 is a schematic figure that shows an electrical configuration of the content display device 1.
FIG. 13 is a schematic figure that shows a configuration of a storage area of a RAM 13.
FIG. 14 is a schematic figure that shows a configuration of a storage area of an EEPROM 14.
FIG. 15 is a schematic figure that shows a configuration of a storage area of a memory card 17.
FIG. 16 is a schematic figure that shows a configuration of a manual content list storage area 142 of the EEPROM 14.
FIG. 17 is a schematic figure that shows a configuration of an automatic content list storage area 143 of the EEPROM 14.
FIG. 18 is a flowchart of main processing.
FIG. 19 is a flowchart of content selection processing that is performed in the main processing.
FIG. 20 is a flowchart of content deletion processing that is performed in the main processing.
FIG. 21 is a flowchart of content acquisition processing that is performed in the main processing.
FIG. 22 is a flowchart of manual content acquisition processing that is performed in the content acquisition processing.
FIG. 23 is a flowchart of content deletion processing during manual acquisition that is performed in the manual content acquisition processing.
FIG. 24 is a flowchart of already read content deletion processing that is performed in content deletion processing during manual acquisition and content deletion processing during automatic acquisition.
FIG. 25 is a flowchart of expired content deletion processing that is performed in the content deletion processing during manual acquisition and the content deletion processing during automatic acquisition.
FIG. 26 is a flowchart of automatic content acquisition processing that is performed in the content acquisition processing.
FIG. 27 is a flowchart of the content deletion processing during automatic acquisition that is performed in the automatic content acquisition processing.
FIG. 28 is a flowchart of content deletion processing during manual acquisition in a second embodiment.
FIG. 29 is a flowchart of content deletion processing during automatic acquisition in the second embodiment.
FIG. 30 is a flowchart of content deletion processing during manual acquisition in a third embodiment.

### Best Mode for Carrying Out the Invention

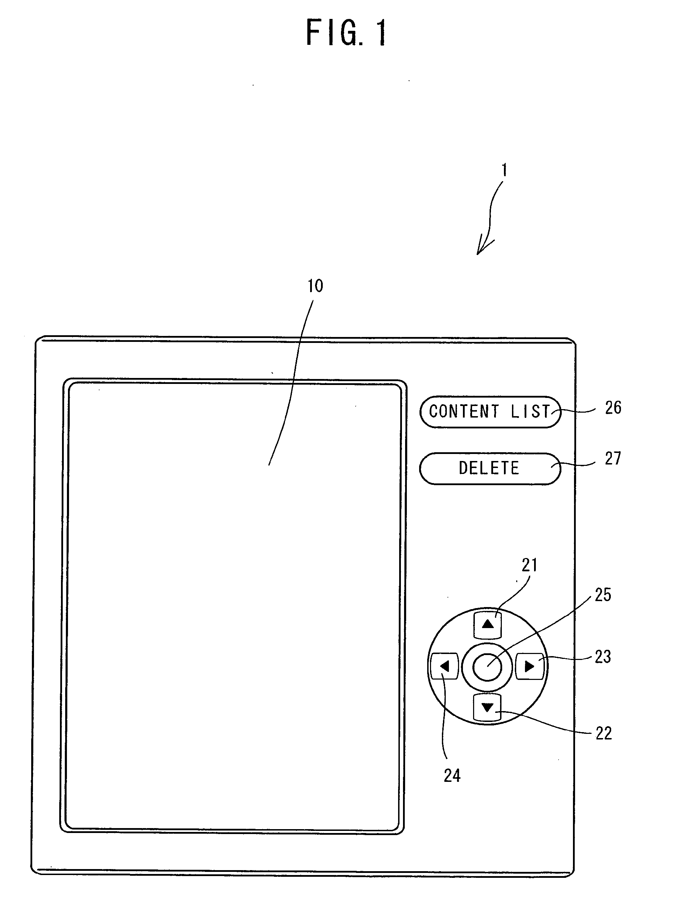

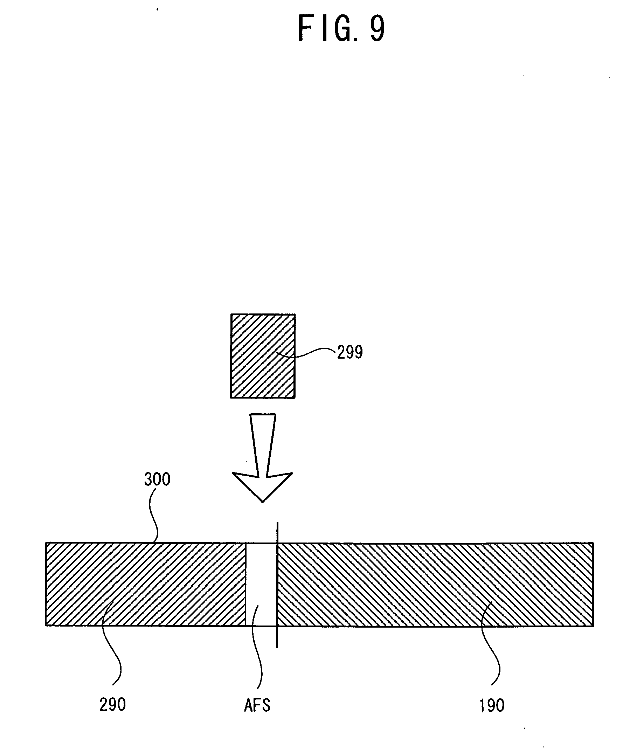

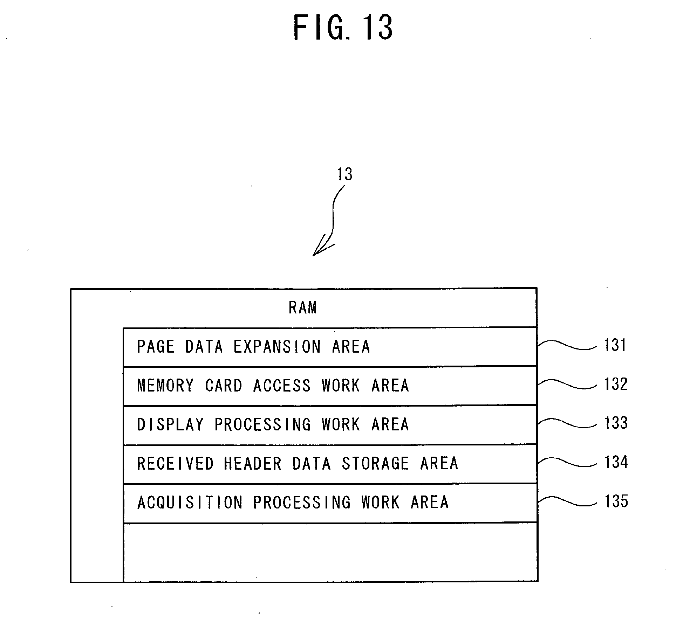

A first embodiment to a third embodiment of the present disclosure will be explained below with reference to the drawings. First, an external appearance and a main operation of a content display device 1 in the first embodiment to the third embodiment will be explained with reference to FIG. 1. As shown in FIG. 1, the content display device 1 has a roughly rectangular shape and includes on its front face a display portion 10 that is provided with an electrophoretic display medium. The content display device 1 also includes, on its right side face, an insertion opening for inserting a memory card 17 (refer to FIGS. 9 and 13), although the insertion opening is not shown in the drawings. Also included on the right side face is a port for connecting a cable that connects to a personal computer 2 (hereinafter called the PC; refer to FIG. 9). In the content display device 1, content that is stored in the memory card 17 can be displayed in the display portion 10. Note that in the first embodiment to the third embodiment, the "content" is text data that contains text characters and/or still images.

To the right of the display portion 10, a Set key 25 is provided, and an Up key 21, a Down key 22, a Left key 24, and a Right key 23 are respectively provided above, below, to the left of, and to the right of the Set key 25. In addition, a Content List key 26 and a Delete key 27 are provided above the Set key 25, the Up key 21, the Down key 22, the Left key 24, and the Right key 23. The Content List key 26 is a key for displaying a content list screen, the Delete key is a key for deleting content. The Set key is a key for setting the content that will be displayed or the content that will be deleted, the Up key 21 and the Down key 22 are keys for selecting content on the content list screen or a delete screen, and the Left key 24 and the Right key 23 are keys for performing page-turning of the content that is displayed.

Operations such as viewing of the content that is stored in the memory card 17 and the like may be performed by operating the keys 21 to 27. Specifically, selecting the Content List key causes the content list screen (not shown in the drawings), which shows a list of the content items that are stored in the memory card 17, to be displayed in the display portion 10. Operating the Up key 21 or the Down key 22 makes it possible to select content by moving a cursor on the content list screen. Selecting the Set key 25 causes the content that is selected by the cursor to be set as display content and to be displayed in the display portion 10. When the content is being displayed in the display portion 10, selecting the Left key 24 causes a next page of the content to be displayed, and selecting the Right key 23 causes a preceding page of the content to be displayed. Selecting the Delete key 27 on the content list screen causes the content that is selected by the cursor to be deleted. In addition, if the Delete key is selected in a state in which the content is being displayed in the display portion 10, the content that is being displayed is deleted.

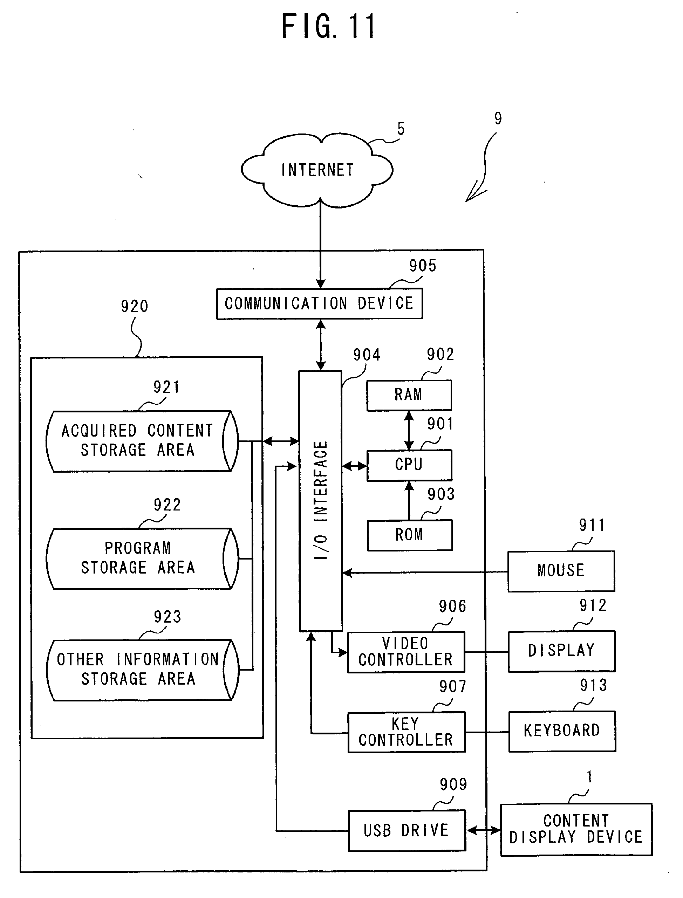

The content display device 1 may also connect to a PC 9, acquires content from the PC 9, and stores the content in the memory card 17. A content acquisition application is installed in the PC 9 for acquiring the content (transmitted content) to be transmitted to the content display device 1. The content acquisition application may use a known technology to make a user to specify content in the PC 9, content within a LAN, and content that is provided on the Internet 5. Content data that is actual data for the specified content is stored, along with header data, in an acquired content storage area 921 of a hard disk device 920 of the PC 9 (refer to FIG. 11). Note that this sort of method of acquiring the transmitted content is called "manual acquisition". Furthermore, a content name, a stored content volume (size), and a value (for example, 1) that indicates that the content was acquired by manual acquisition are stored in the header data.

The content acquisition application can also acquire content by a method called "automatic acquisition". Automatic acquisition is a method by which the content acquisition application acquires content based on information that is set (specified by the user) in advance, without the user's designating the content to be acquired one item at a time every time the content is acquired.

The automatic acquisition method may be, for example, a method that utilizes RDF Site Summary (RSS). The Uniform Resource Locator (URL) of a site where an RSS document are provided and the timing of RSS document acquisition (at specified time intervals, at a designated time, when a connection is made to the Internet 5, or the like) may be registered. The PC 9 then acquires the RSS document that is located at the registered URL at the registered timing, utilizing a function called an RSS reader. Information in the acquired RSS document is then compared to information in previously acquired RSS document. If the information has changed, information on the site that corresponds to the RSS document has been updated. Therefore, the information on the site on the Internet 5 is acquired as the content data and stored into the acquired content storage area 921 of the hard disk device 920 of the PC 9. In other words, if the information in the content changes, the automatic acquisition method can acquire the content automatically, so the user can acquire the most recent information in the content.

Another example of the automatic acquisition method may involve electronic mail. Information that is required to receive electronic mail, such as an address of an incoming mail server, a user name, a password, and the like, and a timing of electronic mail receiving (at specified time intervals, at a designated time, when a connection is made to the Internet 5, or the like) may be registered in advance. Then, when the PC 9 connects to the incoming mail server at the registered timing, if electronic mail has arrived at the incoming mail server, the electronic mail is downloaded to the PC 9. The downloaded electronic mail is then stored as the content data into the acquired content storage area 921 of the hard disk device 920 of the PC 9. Other examples may include reminder functions of a schedule management tool and a to do list (a list of tasks that must be performed). The reminder functions provide information to the user on a designated date in accordance with a schedule that is set in advance.

Thus, according to automatic acquisition method, the most recent content may be acquired automatically, even if the user does not make a particular effort to designate the content. Accordingly, it may be possible for the user to know that the content has been updated and created, and to view the information on the content display device 1, without making a conscious effort. Note that the header data is created when the content is stored on the hard disk by the automatic acquisition method. The content name and the content size are stored in the header data, in the same manner as in a case of manual acquisition, along with a value (for example, 0) that indicates that the content was acquired by automatic acquisition.

Note that, hereinafter, the content that is acquired by manual acquisition is called "manually acquired content", and the content that is acquired by automatic acquisition is called "automatically acquired content". Furthermore, the manually acquired content that is stored in a content storage area 300 is called "manual content", and the automatically acquired content that is stored in the content storage area 300 is called "automatic content".

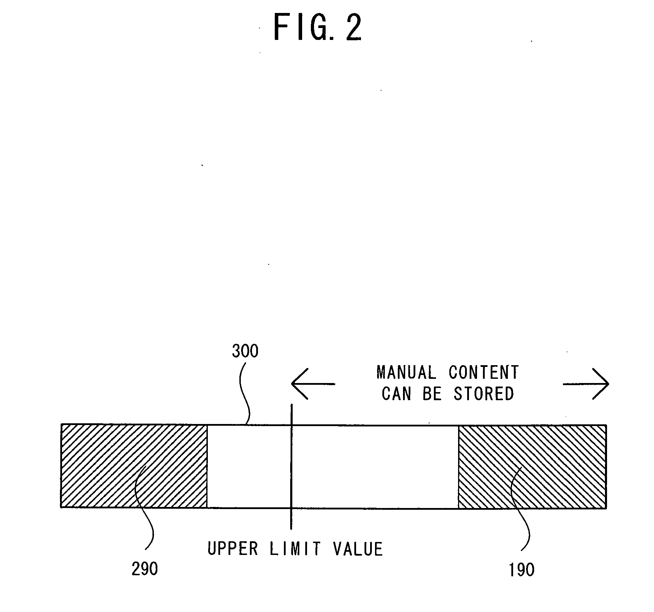

The content storage area 300 will be explained using explanatory figures 500 and 501, with reference to FIGS. 2 to 10.

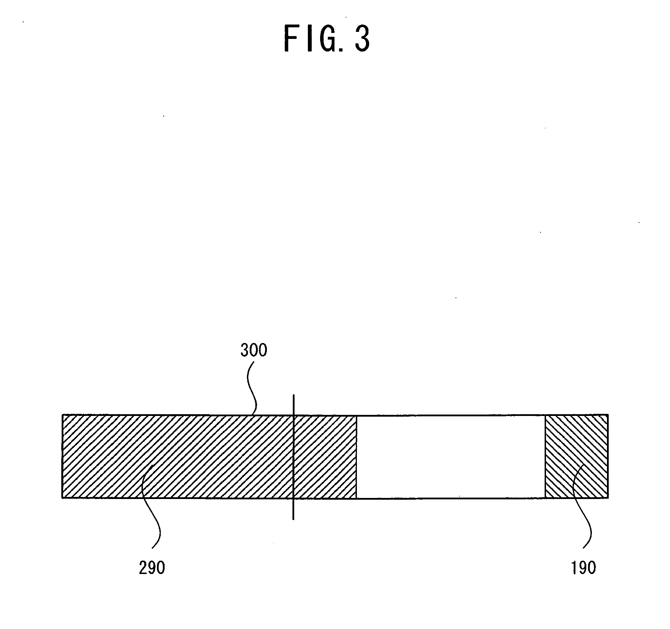

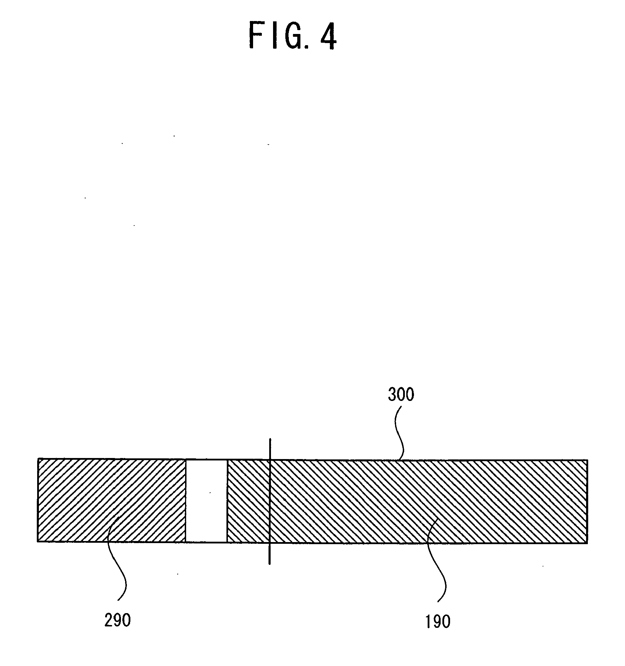

In FIGS. 2 to 10, the storage capacity of the content storage area 300 is shown as a strip, and the stored volume of the automatic content is shown by shading with diagonal lines that slope down to the left, starting on the left side of the figure. This shaded area is defined as a stored automatic content volume 290. The stored volume of the manual content is shown by shading with diagonal lines that slope down to the right, starting on the right side of the figure. This shaded area is defined as a stored manual content volume 190. In the first embodiment to the third embodiment, as shown in the explanatory figure 500 that is shown in FIG. 2, a storage capacity that is capable of storing the manually acquired content is determined by determining an upper limit value. Thus, the manually acquired content cannot be stored in a volume greater than the upper limit value. In other words, a state such as that shown in an explanatory figure 502 that is shown in FIG. 4 cannot be created. However, the automatically acquired content may be stored such that the automatically acquired content overflows into the storage capacity for the manual content. In other words, the automatically acquired content may be stored in a volume that is greater than a difference between the total capacity and the storage capacity for the manual content. This state is the state that is shown in the explanatory figure 501 that is shown in FIG. 3. Hereinafter an excess volume of the automatically acquired content that is greater than the difference between the total capacity and the storage capacity for the manual content is called an "overflow volume VO", the storage capacity for the manual content is called a "manual storage capacity", and the difference between the total capacity and the storage capacity for the manual content is called an "automatically allocable capacity".

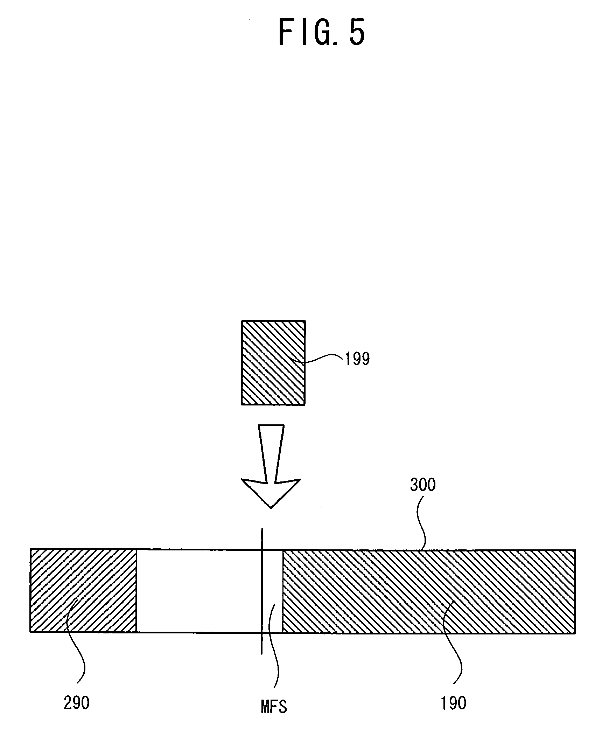

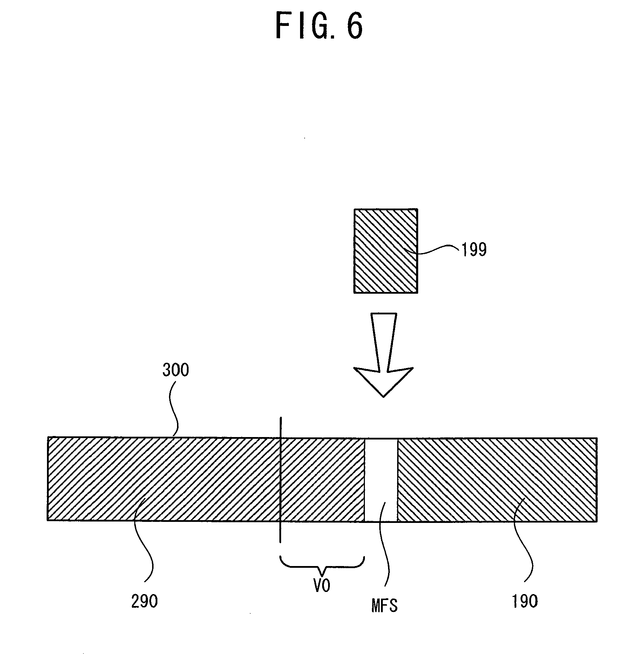

Next, cases in which storage capacity cannot be allocated for storing the manually acquired content will be explained with reference to FIGS. 5 and 6. In a case where an available capacity MFS within the manual storage capacity, which is a difference between the manual storage capacity and the stored manual content volume 190, is less than a storage volume 190 of the manual content item that is to be added, as in an explanatory figure 503 that is shown in FIG. 5, the manually acquired content item cannot be stored. The manually acquired content item also cannot be stored in a case where the difference between the manual storage capacity and the sum of the stored manual content volume 190 and the overflow volume VO is less than the storage volume 190 of the manually acquired content item that is to be added, as in an explanatory figure 504 that is shown in FIG. 6. The cases shown in the explanatory figures 503 and 504 may both be treated as states in which the available capacity MFS within the manual storage capacity is less than the storage volume 190 of the manually acquired content item that is to be added.

In a case like that in the explanatory figure 503 that is shown in FIG. 5, the manually acquired content item cannot be stored unless some of the manual content is deleted. Accordingly, the content display device 1 displays, in the display portion 10, a message that says, for example, "The content cannot be stored, because the storage capacity is insufficient, so please delete the manual content," prompting the user to delete the manual content. The manually acquired content item that the user is attempting to store is not stored. In a case like that in the explanatory figure 504 that is shown in FIG. 6, manual content can be stored if the automatic content that is stored in excess of the automatically allocable capacity is deleted. Accordingly, the automatic content is automatically deleted in accordance with specified conditions. How much volume of the automatic content is deleted may differ according to which of the first embodiment to the third embodiment is practiced.

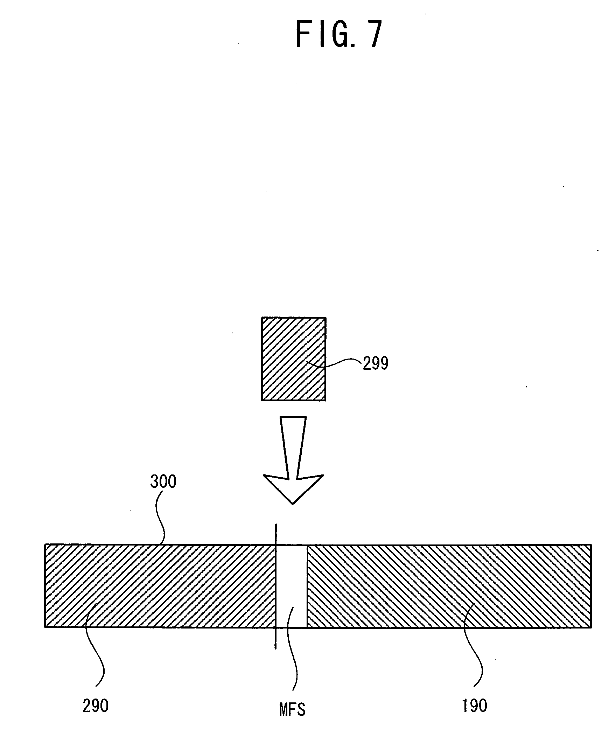

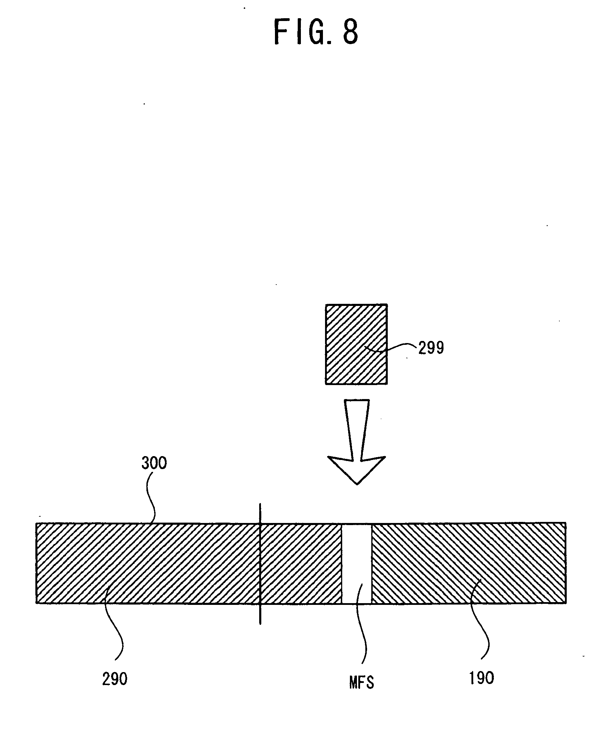

Next, cases in which storage capacity cannot be allocated for storing the automatically acquired content item will be explained with reference to FIGS. 7 to 10. In an explanatory figure 505 that is shown in FIG. 7, the entire automatically allocable capacity is being used for storing the automatic content. The automatic content can be stored such that the volume exceeds the automatically allocable capacity. However, the difference between the manual storage capacity and the stored manual content volume 190, that is, the available capacity MFS within the manual storage capacity, is less than the storage volume 290 of the automatically acquired content item that is to be added, the automatically acquired content item cannot be stored. In an explanatory figure 506 that is shown in FIG. 8, all of the entire automatically allocable capacity is being used for storing the automatic content, and the automatic content is also stored such that the volume exceeds the automatically allocable capacity. Furthermore, because the difference between the manual storage capacity and the sum of the stored manual content volume 190 and the overflow volume VO, that is, the available capacity MFS within the manual storage capacity, is less than the storage volume 290 of the automatic command that is to be added, the automatic command cannot be stored.

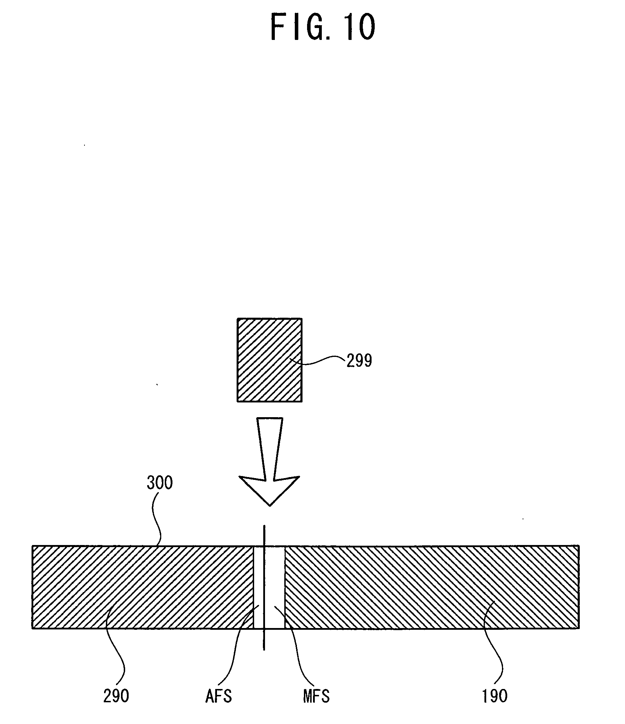

The automatic content also cannot be stored in a case where an available capacity AFS exists within the automatically allocable capacity, but is less than the storage volume 290 of the automatically acquired content item that is to be added, and the entire manual storage capacity is being used for storing the manual content, as in an explanatory figure 507 that is shown in FIG. 9. In an explanatory figure 508 that is shown in FIG. 10, the available capacity AFS exists within the automatically allocable capacity, but is less than the storage volume 290 of the automatically acquired content item that is to be added. The available capacity MFS within the manual storage capacity also exists, but even if the available capacity AFS within the automatically allocable capacity and the available capacity MFS within the manual storage capacity are combined, they are still less than the storage volume 290 of the automatically acquired content item that is to be added, so the automatically acquired content item cannot be stored.

In cases where the automatic content cannot be stored, as in the explanatory figures 505 to 508, the manual content can be stored if the automatic content is deleted. Accordingly, the automatic content is automatically deleted in accordance with the specified conditions. How much volume of the automatic content is deleted may differ according to which of the first to the third embodiments is practiced.

The conditions for the deletion of the automatic content will now be explained. The first of the conditions (a first condition) is that the use of the content item has been finished. In other words, the content item has already been displayed in the display portion 10. If the display in the display portion 10 has been finished, it may be considered that the user has viewed the content item, so it may be acceptable to delete the content item in order to allocate available capacity. Therefore, the content item that has not been used is not deleted. The second of the conditions (a second condition) is that the content item is an item of the automatic content for which a specified period of time has elapsed since a date and time when the content was created (a date and time when the content was stored in a content storage area 170 of the content display device 1). Therefore, the comparatively old automatic content item for which the specified period of time has elapsed may be deleted, and the comparatively new automatic content item may be kept without being deleted. Note that the specified period of time is set as one week in the first embodiment to the third embodiment. The third of the conditions (a third condition) is that the content to be deleted is a specified number of items of the automatic content that is stored in the content storage area 170, in order by a date and time of creation starting with the content item with the oldest date and time of creation. In the first embodiment to the third embodiment, the specified number of items to be deleted is set to 1, and one item of the automatic content is deleted at a time, starting with the oldest item. Therefore, deletion can be made from the automatic content that is stored in content storage means. Note that although the number of the automatic content items to be deleted is 1 in the first embodiment to the third embodiment, the number is not limited to being 1. For example, it may be acceptable to delete two items at a time, and to reduce the number of items that are deleted such that half of the total number of items are deleted the first time, half of the remaining items are deleted the next time, and half of the remaining items are deleted the next time, as well as to reduce one at a time the number of items that are deleted.

Differences among the first embodiment to the third embodiment will now be explained. In the first embodiment, in a case where the manually acquired content item to be stored cannot be stored, all of the automatic content items that satisfy the first condition are deleted first, and then all of the automatic content items that satisfy the second condition are deleted. Then, an item of the automatic content that satisfies the third condition is deleted until the available capacity for storing the manually acquired content may be allocated. In a case where the automatically acquired content item to be stored cannot be stored, all of the automatic content items that satisfy the first condition are deleted first, and then all of the automatic content items that satisfy the second condition are deleted. Then an item of the automatic content that satisfies the third condition is deleted until the available capacity to store the automatically acquired content may be allocated.

In the second embodiment, in a case where the manually acquired content item to be stored cannot be stored, all of the automatic content items that satisfy the first condition are deleted first, and then an item of the automatic content that satisfies the second condition is deleted until the available capacity to store the manually acquired content may be allocated. Then, an item of the automatic content that satisfies the third condition is deleted until the available capacity to store the manually acquired content may be allocated. In a case where the automatically acquired content to be stored cannot be stored, all of the automatic content items that satisfy the first condition are deleted first, and then an item of the automatic content that satisfies the second condition is deleted until the available capacity to store the automatically acquired content may be allocated. Then an item of the automatic content that satisfies the third condition is deleted until the available capacity to store the automatically acquired content may be allocated.

In the third embodiment, in a case where the manually acquired content to be stored cannot be stored, all of the automatic content items that satisfy the first condition are deleted first, and then all of the automatic content items that satisfy the second condition are deleted, in the same manner as in the first embodiment. Then, an item of the automatic content that satisfies the third condition is deleted until the overflow volume VO ceases to exist.

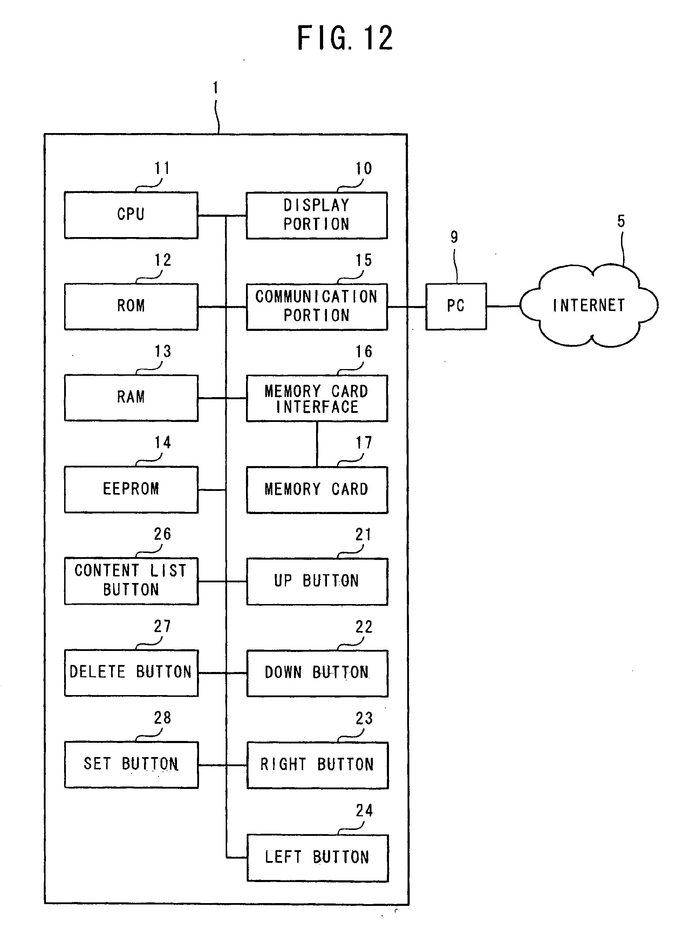

Next, electrical configurations of the PC 9 and the content display device 1, which are common to the first embodiment to the third embodiment, will be explained with reference to FIGS. 11 and 12.

The PC 9 will be explained first. The PC 9 is what is called a personal computer and is a general-purpose type of device. As shown in FIG. 11, the PC 9 is provided with a CPU 901 that performs control of the PC 9. A RAM 902 that stores various types of data temporarily, a ROM 903 that stores a BIOS and the like, and an I/O interface 904 that mediates data transfers are connected to the CPU 901. The hard disk device 920 is connected to the I/O interface 904, and at least the acquired content storage area 921, a program storage area 922, and an other information storage area 923 are provided in the hard disk device 920.

The acquired content storage area 921 is used in the previously described content acquisition application that performs the acquisition of the content and the transmission to the content display device 1, and stores the acquired content and the header data for the content. A program of the content acquisition application that is to be executed by the CPU 901 is stored in the program storage area 922, and other information that is to be used by the PC 9 is stored in the other information storage area 923.

A mouse 911, a video controller 906, a key controller 907, a USB drive 909, and a communication device 905 are also connected to the I/O interface 904. In addition, a display 912 is connected to the video controller 906, and a keyboard 913 is connected to the key controller 907. The communication device 905 is capable of connecting to the Internet 5. The content display device 1 can be connected to the USB drive 909 using a USB cable. It is also obvious that a schematic diagram may be used that shows a configuration in which the PC 9 is connected to a LAN and not just to the Internet 5.

Next, the content display device 1 will be explained. As shown in FIG. 12, a CPU 11 that performs control of the content display device 1, a ROM 12 that stores a control program and the like, a RAM 13 that stores various types of data temporarily, and an EEPROM 14 that is a nonvolatile memory that stores various types of data are provided in the content display device 1. The display portion 10 that displays an image and a memory card interface 16 that connects the memory card 17 are also provided in the content display device 1. A communication portion 15 is also provided for connecting to the PC 9. Note that the PC 9 can be connected to the Internet 5. The Up key 21, the Down key 22, the Left key 24, and the Right key 23, the Set key 25, the Content List key 26, and the Delete key 27 are also provided in the content display device 1 (refer to FIG. 1). The ROM 12, the RAM 13, the EEPROM 14, the display portion 10, the memory card interface 16, the communication portion 15, the Up key 21, the Down key 22, the Left key 24, and the Right key 23, the Set key 25, the Content List key 26, and the Delete key 27 are connected to the CPU 11 through a bus.

Next, storage areas that are provided in the RAM 13, the EEPROM 14, and the memory card 17 will be explained with reference to FIGS. 13 to 17.

As shown in FIG. 13, a page data expansion area 131, the page data expansion area 131 for storing display data that is to be displayed in the display portion 10, a memory card access work area 132, a display processing work area 133, a received header data storage area 134, an acquisition processing work area 135, and the like are provided in the RAM 13. Note that other storage areas that not shown in the drawing may also be provided in the RAM 13. The memory card access work area 13 is used as a temporary storage area during access to the memory card 17. The display processing work area 133 is used temporarily for displaying. The received header data storage area 134 stores the header data that is received from the PC 9. The acquisition processing work area 135 is used temporarily in content acquisition processing.

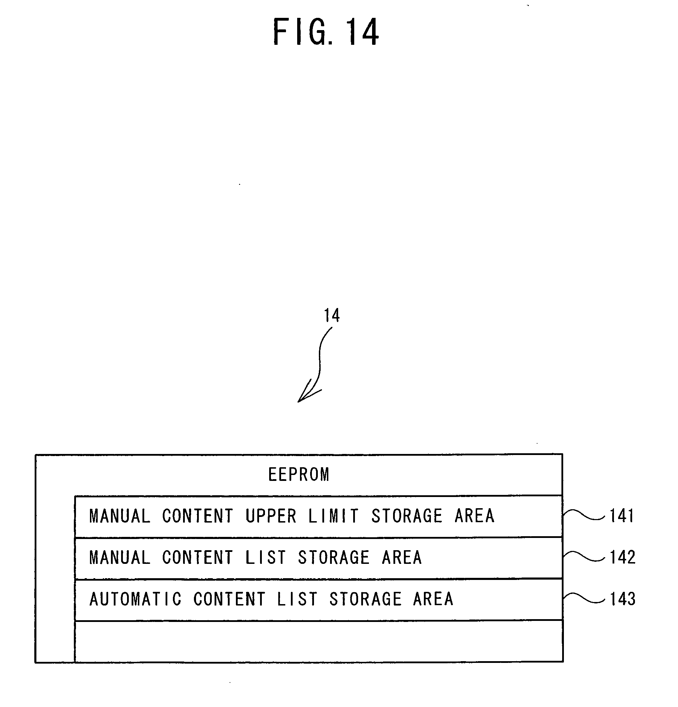

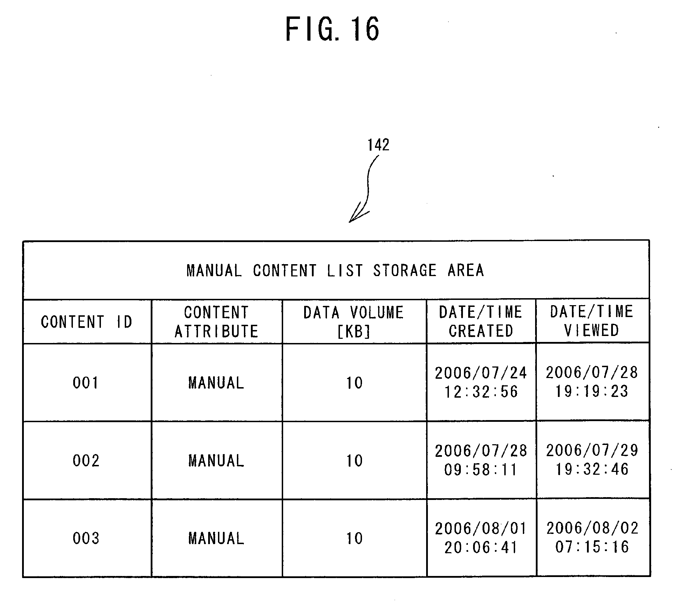

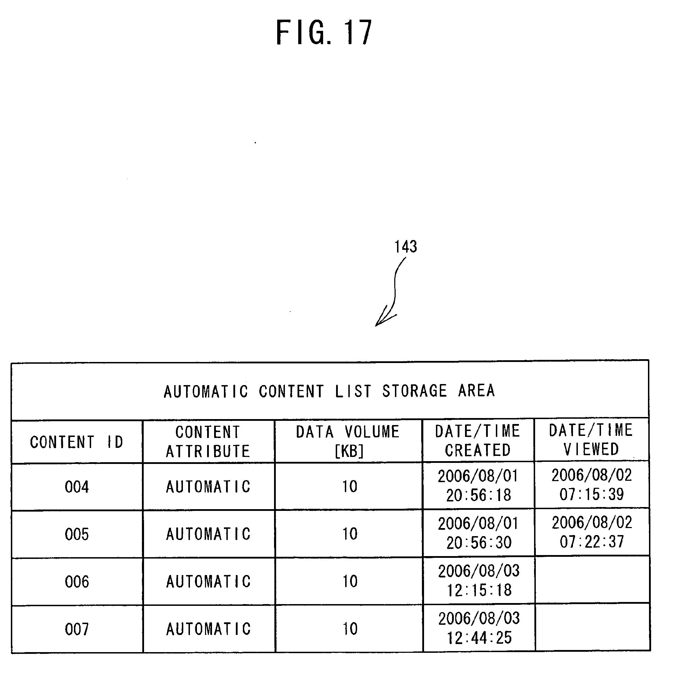

As shown in FIG. 14, a manual content upper limit storage area 141, a manual content list storage area 142, an automatic content list storage area 143, and the like are provided in the EEPROM 14. The manual storage capacity is stored in the manual content upper limit storage area 141, and information is stored in the manual content list storage area 142 that pertains to the manual content that is stored in the content storage area 300 of the memory card 17 (refer to FIG. 16). Furthermore, information is stored in the automatic content list storage area 143 that pertains to the automatic content that is stored in the content storage area 300 (refer to FIG. 17). Note that other storage areas that are not shown in the drawing may also be provided in the EEPROM 14.

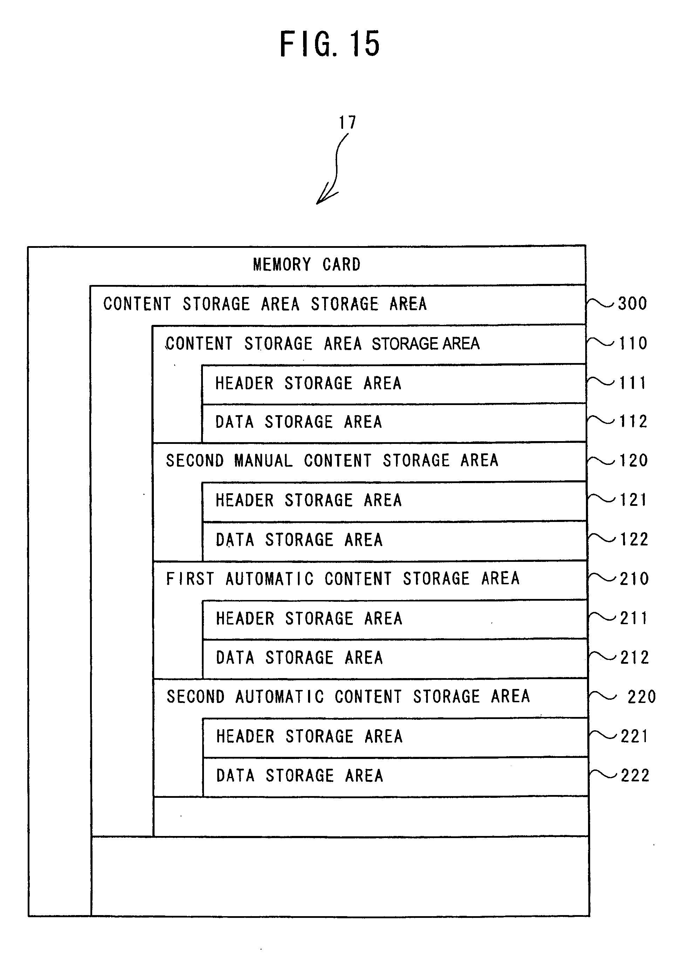

As shown in FIG. 15, the content storage area 300 is provided in the memory card 17. In the content storage area 300, the manually acquired content is stored as the manual content, and the automatically acquired content is stored as the automatic content. In the example that is shown in FIG. 15, a first manual content storage area 110, a second manual content storage area 120, a first automatic content storage area 210, a second automatic content storage area 220, and the like are provided, such that two items of the manual content and two items of the automatic content are respectively stored. Each of these content storage areas is provided with a header storage area and a data storage area. For example, a header storage area 111 and a data storage area 112 are provided in the first manual content storage area 110. A content ID, a content name, a content size, and a value that indicates one of manual acquisition and automatic acquisition (hereinafter called "acquisition information") are stored in the header storage area 111. Note that other storage areas that are not shown in the drawing may also be provided in the memory card 17.

As shown in FIG. 16, a content ID column, a content attribute column, a data volume column, a date/time created column, and a date/time viewed column are provided in the manual content list storage area 142. Data for the manual content is added to the manual content list when the manually acquired content is stored into the content storage area 300. A unique code is allocated and stored in the content ID column when the data is added to the manual content list. The acquisition information that is stored in the header data is stored in the content attribute column. The content size that is stored in the header data is stored in the data volume column, the date and time when the manually acquired content was stored into the content storage area is stored in the date/time created column, and the date and time when the manual content was displayed is stored in the date/time viewed column.

As shown in FIG. 17, a content ID column, a content attribute column, a data volume column, a date/time created column, and a date/time viewed column are provided in the automatic content list storage area 143, in the same manner as in the manual content list storage area 142. Data for the manual content is added to the automatic content list when the automatically acquired content is stored in the content storage area 300. The information that is stored in each of the columns is of the same sort as in the manual content list.

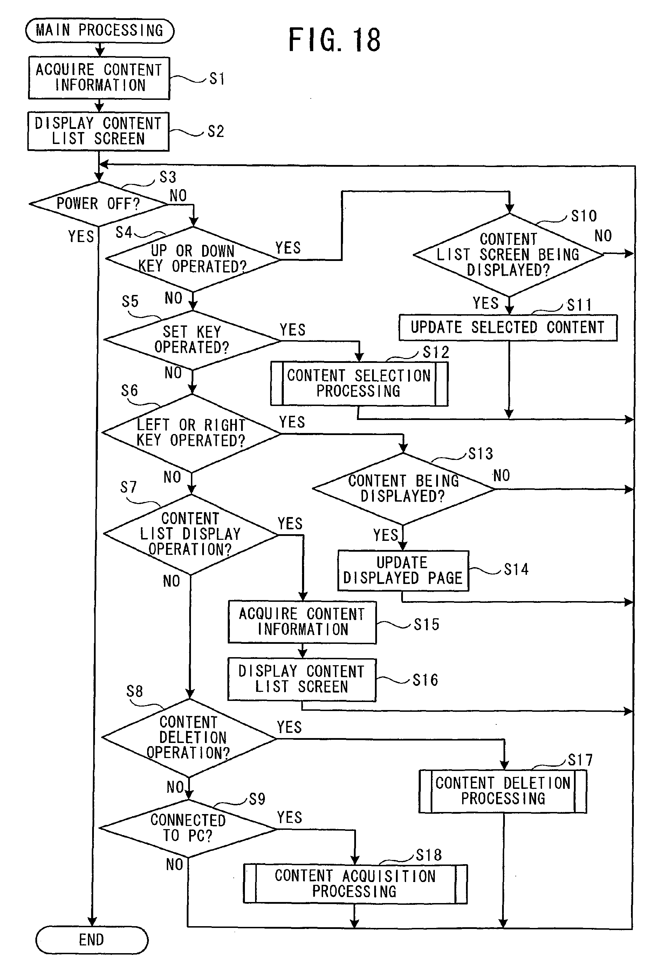

Next, the first embodiment will be explained with reference to FIGS. 18 to 27.

First, main processing will be explained with reference to a flowchart that is shown in FIG. 18. The main processing is performed after the power supply of the content display device 1 is turned on and various types of initial processing are performed. First, information on the content that is stored in the memory card 17 is acquired from the manual content list storage area 142 and the automatic content list storage area 143 (S1), and the content list screen (not shown in the drawings) is displayed in the display portion 10 (S2). Content names are displayed in a list on the content list screen. Note that the content list screen is displayed in a state in which a cursor has selected the content item that is displayed at the top of the list. The order in which the content items are displayed on the content list screen may be in order by the content ID, in order by the content name, in order by the date/time created, and in order such that the content items for which the date/time viewed has not been entered (the unread content items) are displayed at the top.

Next, a determination is made as to whether the power supply has been turned off (S3). If the power supply has been turned off (YES at S3), the processing ends. If the power supply has not been turned off (NO at S3), determinations are made at steps S4 to S9. First, a determination is made as to whether one of the Up key 21 and the Down key 22 has been operated (S4). If one of the Up key 21 and the Down key 22 has been operated (YES at S4), a determination is made as to whether the content list screen is being displayed (S10). If the content list screen is being displayed (YES at S10), processing is performed that updates the content item that is selected by moving the cursor on the content list screen one of up and down (S11). The processing then returns to step S3. Note that the content ID of the content item that is selected by the cursor is stored in a selected content storage area in the RAM 13, although this is not shown in the drawings. If the content list screen is not being displayed (NO at S10), the processing returns to step S3.

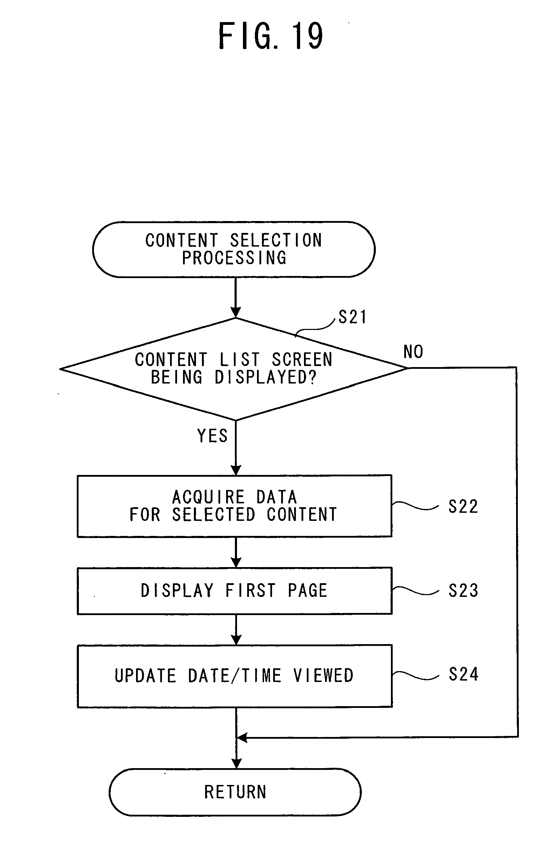

In a case where the Set key 25 has been operated (NO at S4; YES at S5), content selection processing is performed (S12; refer to FIG. 19), and the processing returns to step S3. The content selection processing will now be explained with reference to FIG. 19. In the content selection processing, as shown in FIG. 19, a determination is made as to whether the content list screen is being displayed (S21). If the content list screen is being displayed (YES at S21), an image of a first page of the content item that has been selected by the cursor is displayed in the display portion 10 (S22). More specifically, the content data for the content item whose content ID is stored in a selected content storage area is acquired from a corresponding data storage area in the content storage area 300 and stored in the memory card access work area 132. In addition, the content ID for the content item is stored in the display processing work area 133. Next, the image of the first page is expanded in the page data expansion area, and the display in the display portion 10 is updated (S23).

Next, if the content item that is displayed in the display portion 10 is automatic content, the current date/time is stored in the date/time viewed column for the content item in the automatic content list, and if the content item is manual content, the current date/time is stored in the date/time viewed column for the content item in the manual content list (S24). The determination as to whether the displayed content item is one of automatic content and manual content may be made by referring to the acquisition time that is stored in the header storage area of the corresponding content storage area of the content storage area 300. The processing then returns to the main processing. Note that if the content list screen is not being displayed (NO at S21), the processing immediately returns to the main processing.

Next, returning to the main processing that is shown in FIG. 18, a case is considered in which one of the Right key 23 and the Left key 24 has been operated (NO at S4; NO at S5; YES at S6). In this case, a determination is made as to whether a content item is being displayed in the display portion 10 (S13). If a content item is being displayed (YES at S13), then a page turning command has been issued. Accordingly, if the Right key 23 has been operated, the display is updated to one page before the current page, and if the Left key 24 has been operated, the display is updated to one page after the current page (S14). The processing then returns to step S3.

Next, in a case where the Content List key 26 has been operated (NO at S4; NO at S5; NO at S6; YES at S7), the content data that is stored in the memory card 17 is acquired from the manual content list storage area 142 and the automatic content list storage area 143 (S15), and the content list screen is displayed in the display portion 10 (S16). The processing then returns to step S3.

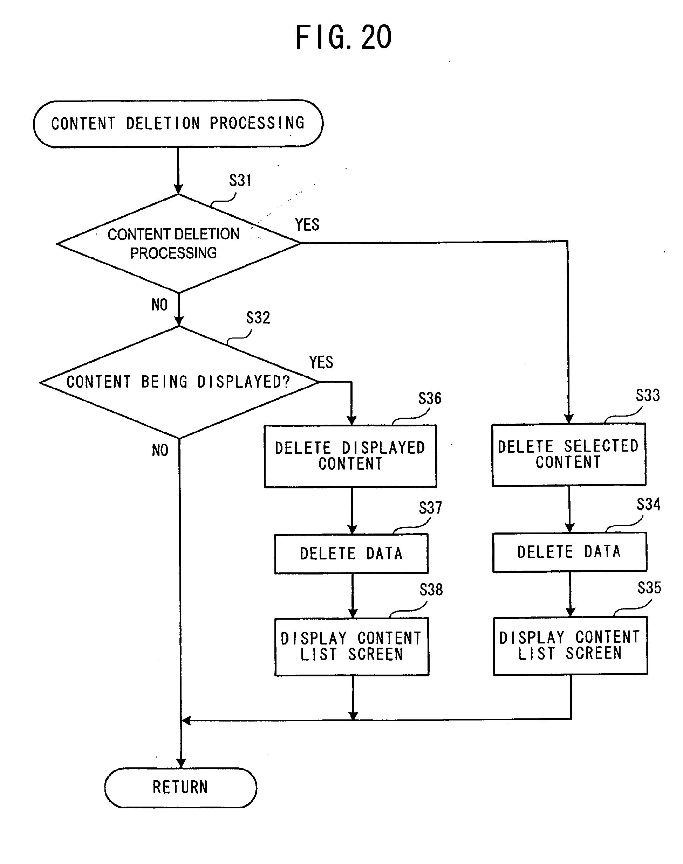

Next, in a case where the Delete key 27 has been operated (NO at S4; NO at S5; NO at S6; NO at S7; YES at S8), content deletion processing is performed (S17; refer to FIG. 20). The processing then returns to step S3. The content deletion processing will now be explained with reference to FIG. 20. As shown in FIG. 20, first, a determination is made as to whether the content list screen is being displayed in the display portion 10 (S31). If the content list screen is being displayed (YES at S31), the content item that is selected by the cursor is deleted from one of the automatic content list and the manual content list (S33), and the content storage area for the deleted content item is deleted from the content storage area 300 of the memory card 17 (S34). Then, the content list screen is created based on the content list after the deletion and is displayed in the display portion 10 (S35). Then the processing returns to the main processing. Note that at step S33, a search of the content ID columns of the automatic content list and the manual content list is conducted using the content ID that is stored in the selected content storage area, and when the content ID is found, the corresponding data is deleted.

If the content list screen is not being displayed (NO at S31), a determination is made as to whether a content item is being displayed in the display portion 10 (S32). If a content item is being displayed in the display portion 10 (YES at S32), the content ID of the content item that is being displayed is acquired from the display processing work area 133, a search of the content ID columns of the automatic content list and the manual content list is conducted, and when the content ID is found, the corresponding data is deleted (S36). Then the content storage area for the deleted content item is deleted from the content storage area 300 of the memory card 17 (S37). Then the content list screen is created based on the content list after the deletion and is displayed in the display portion 10 (S38). Then the processing returns to the main processing.

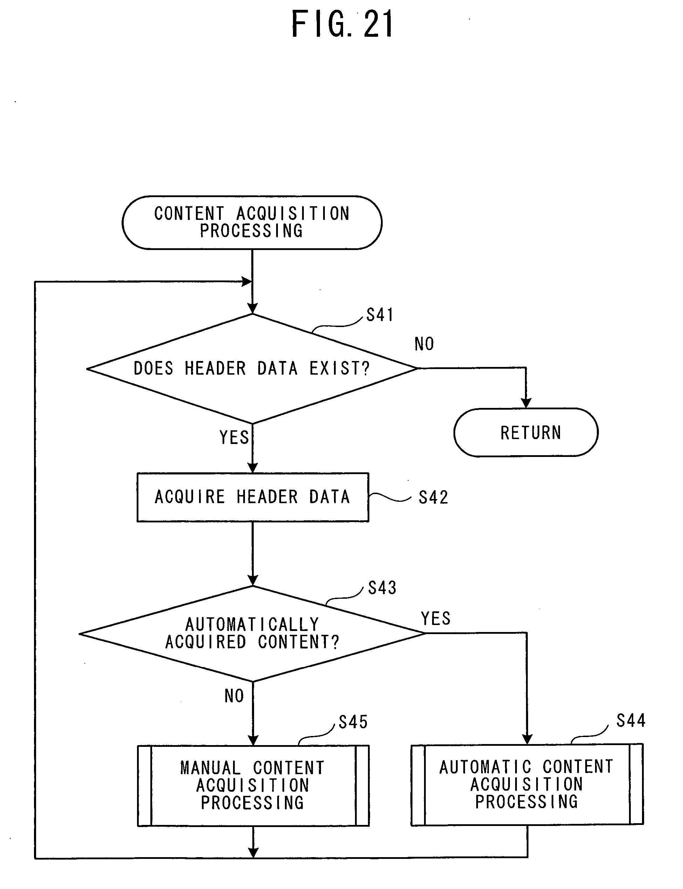

Next, returning to the main processing that is shown in FIG. 18, a case is considered in which the content display device 1 is connected to the PC 9 and the header data for a content item has been transmitted (NO at S4; NO at S5; NO at S6; NO at S7; NO at S8; YES at S9). When the content display device 1 is detected, the application in the PC 9 transmits to the content display device 1 the content item header data that has been set to be transmitted to the content display device 1. When the content display device 1 receives the header data from the PC 9, the content display device 1 stores the received header data in the received header data storage area 134 of the RAM 13. Accordingly, at step S9, a determination is made as to whether the content display device 1 is connected to the PC 9, the header data has been transmitted, and the received header data has been stored in the received header data storage area 134. If the header data is in the received header data storage area 134 (YES at S9), content acquisition processing is performed (S18; refer to FIG. 21). The content acquisition processing will be described in detail with reference to flowcharts in FIGS. 21 to 26 following the explanation of the main processing. After the content item that is acquired from the PC 9 in the content acquisition processing at step S18 is stored into the content storage area 300 of the memory card 17, the processing returns to step S3. Then the determination processing at steps S4 to S9 is performed repeatedly until the power supply is turned off (YES at S3). In a case where any sort of operation has been performed, processing is performed in accordance with that operation. If no operation of any sort has been performed (NO at S4; NO at S5; NO at S6; NO at S7; NO at S8; NO at S9), the processing returns to step S3.

The content acquisition processing will now be explained with reference to the flowcharts in FIGS. 21 to 26. First, as shown in FIG. 21, a determination is made as to whether the header data that was transmitted from the PC 9 is stored in the RAM 13 (S41). The content acquisition processing is being performed because the header data is stored in the RAM 13 and a determination of YES was therefore made at step S9 in the main processing, so here it is determined that the header data is stored in the RAM 13 (YES at S41).

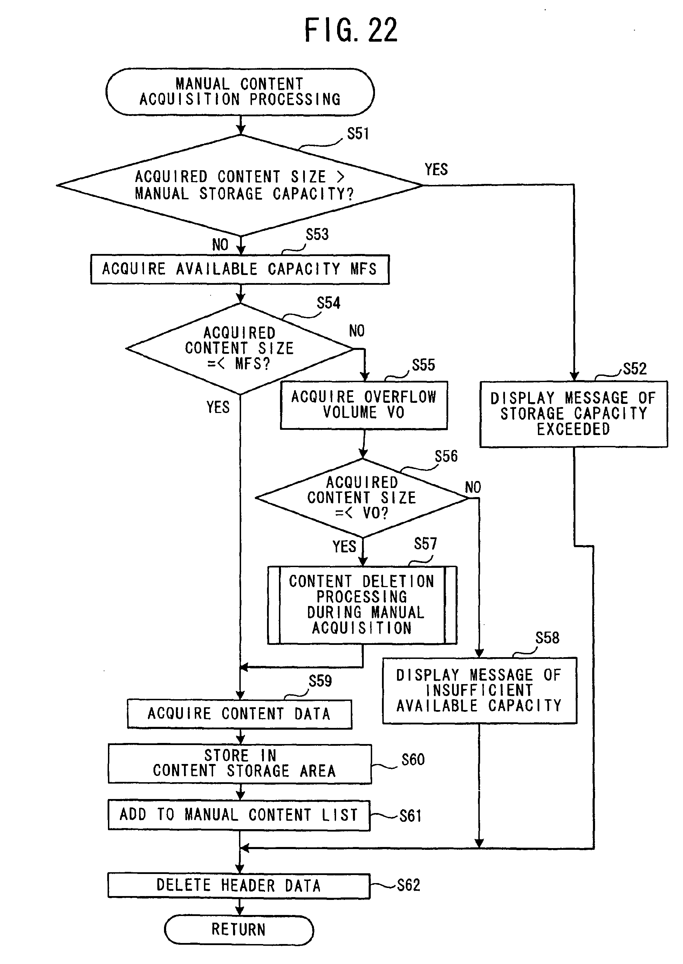

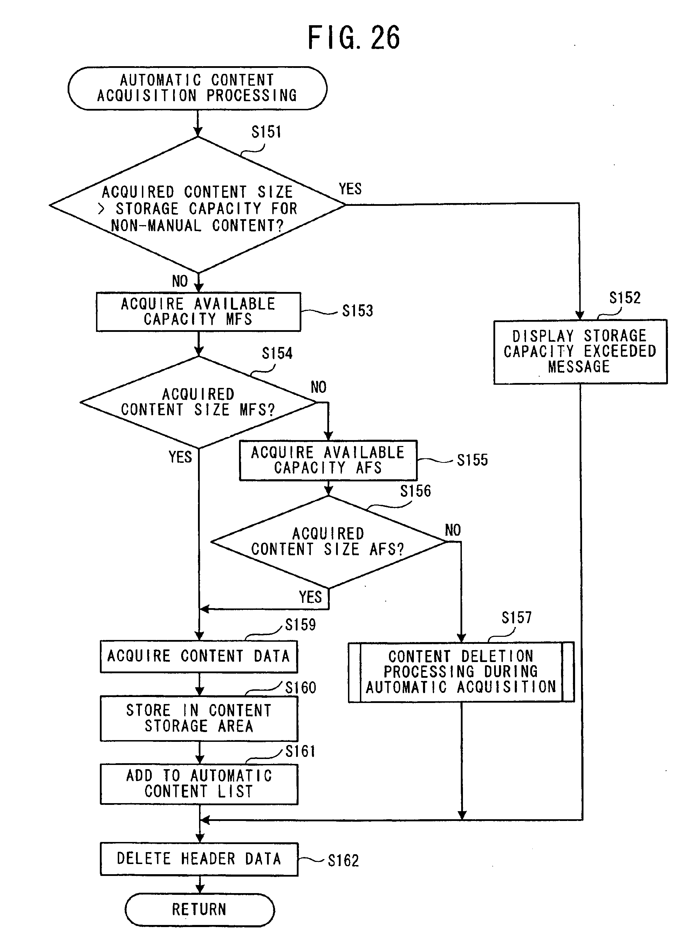

Accordingly, the header data is read (S42), and a determination is made as to whether the acquisition information in the header data indicates automatically acquired content (S43). If the acquisition information is 1 (one), indicating automatically acquired content (YES at S43), automatic content acquisition processing is performed (S44; refer to FIG. 26). If the acquisition information is not 1 and does not indicate automatically acquired content (NO at S43), then the acquisition information is 0 and indicates manually acquired content. Accordingly, manual content acquisition processing is performed (S45; refer to FIG. 22). In both cases, processing for storing the content item in the content storage area 300 of the memory card 17 is performed. The processing then returns to step S41. Note that in both the automatic content acquisition processing (S44) and the manual content acquisition processing (S45), the header data that is processed is deleted from the received header data storage area 134. The automatic content acquisition processing (S44) and the manual content acquisition processing (S45) will be described in detail following the explanation of the content acquisition processing.

When the content acquisition processing returns to step S41, the determination is made as to whether the header data that was transmitted from the PC 9 is stored in the RAM 13 (S41). In a case where a plurality of header data records was transmitted from the PC 9, the header data is still stored in the RAM 13 (YES at S41), so the header data is read, and if the content type in the header data indicates automatically acquired content (YES at S43), the automatic content acquisition processing is performed (S44). On the other hand, if the content type in the header data indicates manually acquired content (NO at S43), the manual content acquisition processing is performed (S45). Once all of the header data records that have been transmitted from the PC 9 have been processed in this manner, it is determined at step S41 that there is no more header data (NO at S41), so the content acquisition processing ends, and the processing returns to the main processing.

Next, the manual content acquisition processing will be explained with reference to the flowchart in FIG. 22. First, a determination is made as to whether the content size included in the header data (hereinafter called the "acquired content size") is greater than the manual storage capacity (S51). If the content size is greater than the manual storage capacity (YES at S51), the manually acquired content item cannot be stored no matter how much of the automatic content is deleted. Accordingly, a message that the storage capacity has been exceeded is displayed in the display portion 10 (S52). Then, the header data for the content item is deleted from the RAM 13 (S62), and the processing returns to the content acquisition processing.

If the content size is not greater than the manual storage capacity (NO at S51), the available capacity MFS within the manual storage capacity is acquired (S53). More specifically, the available capacity MFS is defined as a value of a difference between the value that is stored in the manual content upper limit storage area and the sum of the values in the data volume column for all of the data records that are stored in the manual content list storage area 142. Next, a determination is made as to whether the acquired content size is less than or equal to the available capacity MFS (S54). If the content size is less than or equal to the available capacity MFS (YES at S54), sufficient available capacity exists, and the manually acquired content item can be stored. Accordingly, the content data that corresponds to the header data is acquired from the PC 9 (S59). Specifically, information that requests the content data for the content item whose content ID is indicated in the header data is transmitted to the PC 9. If the information is received by the PC 9, the application transmits the content data for the designated content ID to the content display device 1. The content display device 1 then receives the transmitted content data.

Next, in the content display device 1, the received content data and the header data that is stored in the RAM 13 are stored into the content storage area 300 of the memory card 17 (S60). Then the data for the content is added to the manual content list (S61), the header data for the content item is deleted from the RAM 13 (S62), and the processing returns to the content acquisition processing.

Further, in a case where the acquired content size is not less than or equal to the available capacity MFS (NO at S54), the volume of the automatic content that is stored in excess of the automatically allocable capacity is acquired, is deemed to be the overflow volume VO, and is stored in the acquisition processing work area 135 of the RAM 13 (S55). More specifically, the overflow volume VO may be defined, for example, as the sum of the values in the data volume column for all of the content items that are stored in the automatic content list storage area 143, minus the difference between the total capacity of the content storage area 300 and the manual storage capacity. In other words, it is the volume that is shown as VO in FIG. 6.

Next, a determination is made as to whether the acquired content size is less than or equal to the overflow volume VO (S56). If the acquired content size is not less than or equal to the overflow volume VO, but is greater than the overflow volume (NO at S56), the available capacity within the manual storage capacity will not be greater than the acquired content size, no matter how much of the automatic content is deleted. Accordingly, deleting the automatic content may only result in a state of the stored manual content volume 190 and the stored automatic content volume 290 like that in the explanatory figure 505 that is shown in FIG. 7. In such a state, the manually acquired content item cannot be stored. Moreover, in a case where the overflow volume VO equals zero, a state like that in the explanatory figure 503 that is shown in FIG. 5 will exist, and the manually acquired content item cannot be stored. Accordingly, a message indicating that the capacity is insufficient and the manual content may need to be deleted is displayed in the display portion 10 (S58), the header data for the content item is deleted from the RAM 13 (S62), and the processing returns to the content acquisition processing.

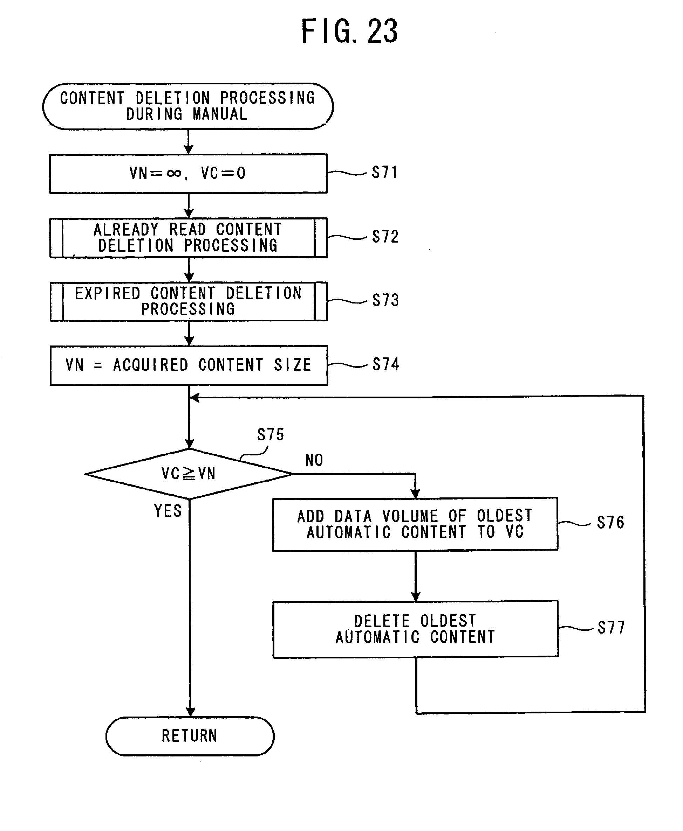

If the acquired content size is less than or equal to the overflow volume VO (YES at S56), the manually acquired content item can be stored, if the automatic content is deleted. This corresponds to the state in the explanatory figure 504 that is shown in FIG. 6. Accordingly, content deletion processing during manual acquisition is performed (S57; refer to FIG. 23). In the content deletion processing during manual acquisition, as much of the automatic content is deleted as will make it possible to allocate available capacity that is equal to the acquired content size. Details will be explained following the explanation of the manual content acquisition processing. Once the content deletion processing during manual acquisition has been performed (S57) and only as much of the available capacity as can store the manually acquired content item has been allocated, the content data that corresponds to the header data is acquired from the PC 9 (S59). Next, the acquired content data and the header data that is stored in the RAM 13 are stored into the content storage area 300 of the memory card 17 (S60). Then the data for the content is added to the manual content list (S61), the header data for the content is deleted from the RAM 13 (S62), and the processing returns to the content acquisition processing.

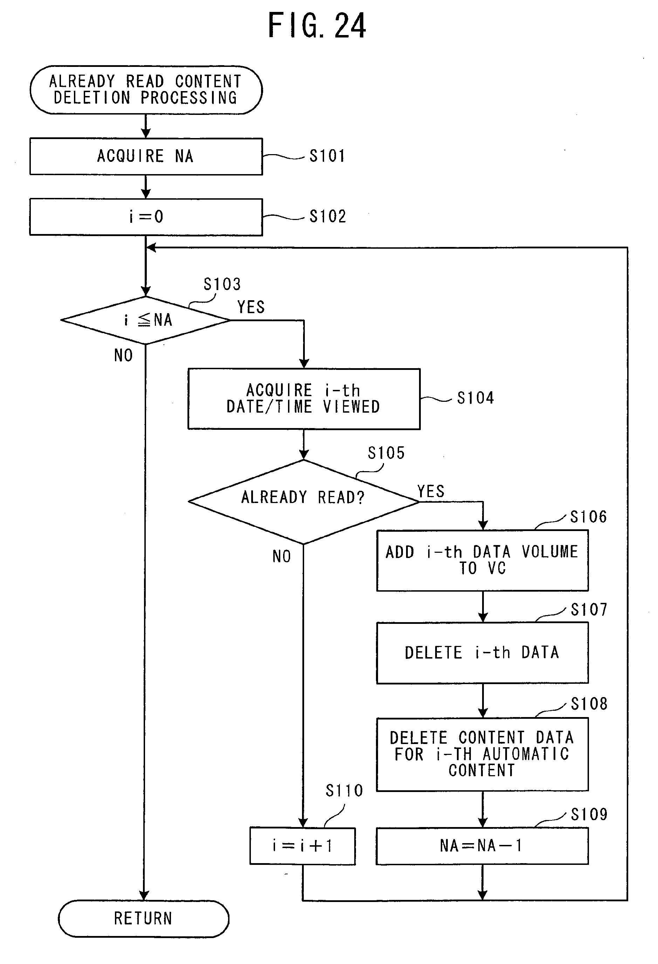

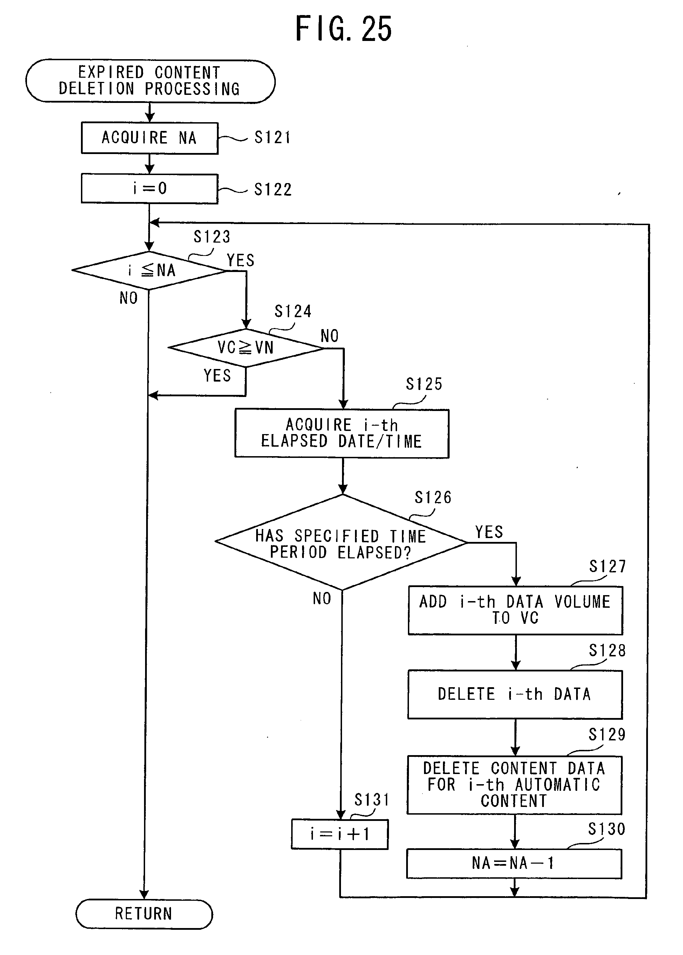

The content deletion processing during manual acquisition will now be explained with reference to the flowchart in FIG. 23. First, initial values are stored for VN, which is a reference volume when the automatic content is deleted, and for VC, which is the total volume of the automatic content that is deleted (S71). The reference volume VN and the total deleted volume VC are stored in the acquisition processing work area 135 of the RAM 13. A value of infinity is stored for the reference volume VN, and zero (0) is stored for VC. Then, already read content deletion processing is performed (S72; refer to FIG. 24), after which expired content deletion processing is performed (S73; refer to FIG. 25). In the first embodiment, in the already read content deletion processing, the automatic content items for which a date and time is stored in the date/time viewed column in the automatic content list, that is, the already read content items, are all deleted (the first condition). Next, in the expired content deletion processing, the automatic content items for which a specified period of time has elapsed since the date and time when the automatic content item was stored in the content storage area 300 of the memory card 17, that is, since the date and time in the date/time created column, are all deleted (the second condition). Note that in the first embodiment, the specified period of time is one week. The already read content deletion processing and the expired content deletion processing will be described in detail with reference to FIGS. 24 and 25, following the explanation of the content deletion processing during manual acquisition.

Once the expired content deletion processing has been performed (S73), the acquired content size is stored as the reference volume VN (S74). In processing at steps S75 to S77, the automatic content item with the oldest date/time created in the automatic content list is deleted one by one at a time (the third condition), until the total deleted volume VC becomes equal to or greater than the reference volume VN. In other words, because the reference volume VN is the acquired content size, the automatic content is deleted one item at a time, in order by date and time created starting from the oldest date/time created, until the total deleted volume VC becomes equal to or greater than the acquired content size.

Specifically, a determination is made as to whether the total deleted volume VC is equal to or greater than the reference volume VN (S75), and if it is not equal to or greater than the reference volume VN (NO at S75), first, the value in the data volume column for the data in the automatic content list that has the oldest date/time in the date/time created column is added to the total deleted volume VC (S76). Then, the automatic content item with the content ID of the automatic content that has the oldest date/time in the date/time created column in the automatic content list is deleted from the content storage area 300 (S77). The processing then returns to step S75.

Then, once again, the determination is made as to whether the total deleted volume VC is equal to or greater than the reference volume VN (S75). At this point, if the total deleted volume VC has been made equal to or greater than the reference volume VN by the deletion of one item of the automatic content at steps S77, S76 (YES at S75), only as much of the available capacity as can store the manually acquired content has been allocated, so the processing returns to the manual content acquisition processing. If the total deleted volume VC is still not equal to or greater than the reference volume VN (NO at S76), another automatic content item with the next oldest date/time created is deleted (S76, S77). The processing at steps S75 to S77 is then performed repeatedly until the total deleted volume VC becomes equal to or greater than the reference volume VN (YES at S75), at which point the processing returns to the manual content acquisition processing.

Next, the already read content deletion processing will be explained with reference to the flowchart in FIG. 24. First, a number of automatic content items NA is acquired (S101). More specifically, the number of the data records for the content that are stored in the automatic content list is counted, and the total is stored as the number of automatic content items NA. Note that the number of automatic content items NA is stored in the acquisition processing work area 135 of the RAM 13. Next, an initial value of zero (0) is stored for a variable i that is used to designate a data record in the automatic content list (S102). Then a determination is made as to whether the variable i is less than or equal to the number of automatic content items NA (S103). If the variable i is less than or equal to the number of automatic content items NA (YES at S103), then an unexamined data record still exists in the automatic content list.

Next, the value in the date/time viewed column of the i-th data record in the automatic content list is acquired (S104). Then, based on whether a date and time is stored in the date/time viewed column, a determination is made as to whether the automatic content that corresponds to the i-th data record has already been read (S105). In a case where the value in the date/time viewed column is not an initial value, it is determined that a date and time is stored in the date/time viewed column (YES at S105), and the automatic content that corresponds to the i-th data record is deleted (S106 to S108). First, the value in the data volume column for the i-th data record is added to the total deleted volume VC (S106), and the i-th data record is then deleted from the automatic content list (S107). Then, the automatic content item whose ID is in the content ID column of the i-th data record is deleted from the content storage area 300 (S108). Then, because one data record is deleted, 1 is subtracted from the number of automatic content items NA (S109), and the processing returns to step S103. Note that in a case where a data record is deleted, the i+1-th data record is moved up to become the i-th data record, so no addition is made to the variable i.

On the other hand, if a date and time is not stored in the date/time viewed column, and the automatic content that corresponds to the i-th data record has not been read yet (NO at S105), the automatic content item will be allowed to remain. Accordingly, in order to examine the next data record, 1 is added to the variable i (S110), and the processing returns immediately to step S103. The processing at steps S103 to S110 is then performed repeatedly until the variable i is not less than or equal to the number of automatic content items NA (NO at S103), at which point all of the data records in the automatic content list have been examined, so the already read content deletion processing ends, and the processing returns to the content deletion processing during manual acquisition.

In such a manner, all of the automatic content items that satisfy the condition that the use of the content has been finished, which is the first condition, are deleted.

Next, the expired content deletion processing will be explained with reference to the flowchart in FIG. 25. First, the number of automatic content items NA is acquired (S121). More specifically, the number of the data records for the content that are stored in the automatic content list is counted, and the total is stored as the number of automatic content items NA. Note that the number of automatic content items NA is stored in the acquisition processing work area 135 of the RAM 13. Next, an initial value of zero (0) is stored for the variable i that is used to designate a data record in the automatic content list (S122). Then, a determination is made as to whether the variable i is less than or equal to the number of automatic content items NA (S123). If the variable i is less than or equal to the number of automatic content items NA (YES at S123), then an unexamined data record still exists in the automatic content list.

Accordingly, a determination is made as to whether the total deleted volume VC is equal to or greater than the reference volume VN (S124). In the first embodiment, a value that indicates infinity is stored as the initial value for the reference volume VN, so at this point, the total deleted volume VC is not equal to or greater than the reference volume VN (NO at S124). Next, an elapsed time d is computed for the i-th data record in the automatic content list and stored in the acquisition processing work area 135 (S125). Specifically, a difference between the i-th date/time created in the automatic content list and the current date/time is determined. Next, a determination is made as to whether a specified period of time has elapsed by determining whether the elapsed time d is equal to or greater than one week (604,800 seconds) (S126). In a case where the elapsed time d is equal to or greater than one week (YES at S126), the automatic content that corresponds to the i-th data record is deleted. First, the value in the data volume column for the i-th data record is added to the total deleted volume VC (S127), the i-th data record is deleted from the automatic content list (S128), and the automatic content item whose ID is in the content ID column of the i-th data record is deleted from the content storage area 300 (S129). Then, because one data record is deleted, 1 is subtracted from the number of automatic content items NA (S130), and the processing returns to step S123. Note that in a case where a data record is deleted, the i+1-th data record is moved up to become the i-th data record, so no addition is made to the variable i.

On the other hand, if the elapsed time d is not equal to or greater than one week (NO at S126), the automatic content item will be allowed to remain, so in order to examine the next data record, 1 is added to the variable i (S131), and the processing returns immediately to step S123. The processing at steps S123 to S131 is then performed repeatedly until the variable i is not less than or equal to the number of automatic content items NA (NO at S123), at which point all of the data records in the automatic content list have been examined, so the expired content deletion processing ends, and the processing returns to the content deletion processing during manual acquisition.

In such a manner, all of the automatic content items that satisfy the condition that the specified period of time has elapsed since the date and time when the content was created (the date and time when the automatic content item was stored in the content storage area 170 of the content display device 1), which is the second condition, are deleted. Therefore, the comparatively old automatic content item for which the specified period of time has elapsed may be deleted, and the comparatively new automatic content item may be kept without being deleted.

Next, the automatic content acquisition processing that is performed in a case where the content that is acquired in the content acquisition processing (refer to FIG. 21) is automatically acquired content will be explained with reference to the flowchart in FIG. 26. First, a determination is made as to whether the acquired content size is greater than the storage capacity outside of where the manual content is stored, that is, is greater than a difference between the total capacity of the content storage area 300 and the total manual content storage capacity (S151). If the content size is greater than the difference between the total capacity of the content storage area 300 and the total manual content storage capacity in the content storage area 300 (YES at S151), the automatically acquired content item cannot be stored, so a message that the storage capacity has been exceeded is displayed in the display portion 10 (S152), the header data for the content item is deleted from the RAM 13 (S162), and the processing returns to the content acquisition processing.

If the acquired content size is not greater than the manual storage capacity (NO at S151), the available capacity MFS within the manual storage capacity is acquired (S153). The computation method is the same as that at step S53 in the manual content acquisition processing (refer to FIG. 22). Next, a determination is made as to whether the content size is less than or equal to the available capacity MFS (S154). If the content size is less than or equal to the available capacity MFS (YES at S154), sufficient available capacity exists, and the automatically acquired content item can be stored, so the content data that corresponds to the header data is acquired from the PC 9 (S159). Specifically, information that requests the content data for the content item whose content ID is indicated in the header data is transmitted to the PC 9. When the information is received by the PC 9, the application transmits the content data for the designated content ID to the content display device 1. The content display device 1 then receives the transmitted content data.

Next, in the content display device 1, the received content data and the header data that is stored in the RAM 13 are stored into the content storage area 300 of the memory card 17 (S160). Then, the data for the content is added to the automatic content list (S161), the header data for the content is deleted from the RAM 13 (S162), and the processing returns to the content acquisition processing. If sufficient available capacity exists within the manual storage capacity, the automatically acquired content item is stored, so unused capacity within the maximum manual storage capacity may not be wasted.

Further, in a case where the acquired content size is not less than or equal to the available capacity MFS (NO at S154), the available capacity AFS within the automatically allocable capacity is acquired (S155). More specifically, the available capacity AFS is determined by computing a difference between the total capacity of the content storage area 300 and the value that is stored in the manual content upper limit storage area, then subtracting the sum of the values in the data volume column for all of the data records that are stored in the automatic content list storage area 143. Next, a determination is made as to whether the acquired content size is less than or equal to the available capacity AFS (S156). If it is less than or equal to the available capacity AFS (YES at S156), sufficient available capacity exists within the automatically allocable capacity, and the automatically acquired content item can be stored within the automatically allocable capacity, so the content data that corresponds to the header data is acquired from the PC 9 (S159). Next, the acquired content data and the header data that is stored in the RAM 13 are stored into the content storage area 300 of the memory card 17 (S160). Then, the data for the content is added to the automatic content list (S161), the header data for the content is deleted from the RAM 13 (S162), and the processing returns to the content acquisition processing.

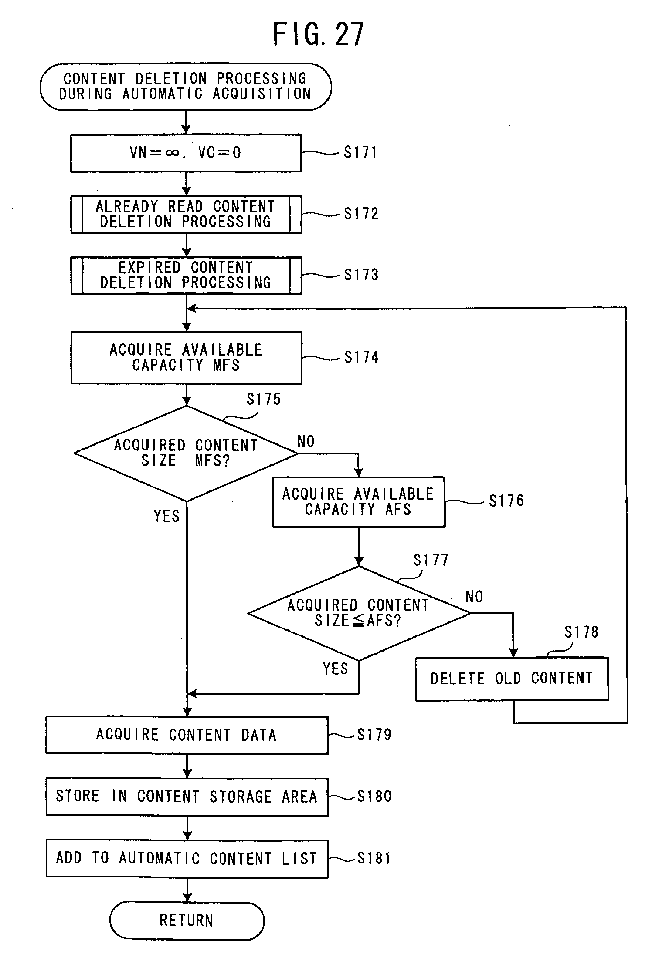

Furthermore, in a case where the acquired content size is not less than or equal to the available capacity AFS (NO at S156), the available capacity must be allocated by deleting the automatic content. Accordingly, content deletion processing during automatic acquisition is performed (S157; refer to FIG. 27). In the first embodiment, the automatic content item that satisfies the first condition, the automatic content item that satisfies the second condition, and the automatic content item that satisfies the third condition are all deleted in the content deletion processing during automatic acquisition. Details will be explained in detail following the explanation of the automatic content acquisition processing. In the content deletion processing during automatic acquisition (S157), the available capacity is allocated, the acquired content data and the header data that is stored in the RAM 13 are stored into the content storage area 300 of the memory card 17, and the data for the content is added to the automatic content list. The header data for the content item is then deleted from the RAM 13 (S162), and the processing returns to the content acquisition processing.

The content deletion processing during automatic acquisition will now be explained with reference to the flowchart in FIG. 23. First, initial values are stored for VN, which is the reference volume when the automatic content is deleted, and for VC, which is the total volume of the automatic content that is deleted (S171). The reference volume VN and the total deleted volume VC are stored in the acquisition processing work area 135 of the RAM 13. A value that indicates infinity is stored for the reference volume VN, and zero (0) is stored for VC. Then the already read content deletion processing is performed (S172; refer to FIG. 24), after which the expired content deletion processing is performed (S173; refer to FIG. 25). The already read content deletion processing and the expired content deletion processing are the same as the processing that are performed in the content deletion processing during manual acquisition, so explanations will be omitted here, with reference to the earlier explanations.

Once the expired content deletion processing has been performed (S173), the available capacity MFS within the manual storage capacity is acquired (S174). The computation method is the same as that at step S53 in the manual content acquisition processing (refer to FIG. 22). Next, a determination is made as to whether the acquired content size is less than or equal to the available capacity MFS (S175). If it is less than or equal to the available capacity MFS (YES at S175), sufficient available capacity exists, and the automatically acquired content item can be stored, so the content data that corresponds to the header data is acquired from the PC 9 (S179). Next, the acquired content data and the header data that is stored in the RAM 13 are stored into the content storage area 300 of the memory card 17 (S180). Then the data for the content item is added to the automatic content list (S181), and the processing returns to the automatic content acquisition processing.

Further, in a case where the acquired content size is not less than or equal to the available capacity MFS (NO at S175), the available capacity AFS within the automatically allocable capacity is acquired (S176). The acquisition method is the same as that at step S155 in the automatic content acquisition processing. Next, a determination is made as to whether the acquired content size is less than or equal to the available capacity AFS (S177). If it is less than or equal to the available capacity AFS (YES at S177), sufficient available capacity exists within the automatically allocable capacity, and the automatically acquired content item can be stored within the automatically allocable capacity. Accordingly, the content data that corresponds to the header data is acquired from the PC 9 (S179), and the acquired content data and the header data that is stored in the RAM 13 are stored in the content storage area 300 of the memory card 17 (S180). Then the data for the content item is added to the automatic content list (S181), and the processing returns to the automatic content acquisition processing.

Furthermore, in a case where the acquired content size is not less than or equal to the available capacity AFS (NO at S177), the available capacity needs to be allocated by deleting the automatic content. Accordingly, the data for which the date and time in the date/time created column in the automatic content list is the oldest is deleted (S178). The processing then returns to step S174. Then the processing at steps S174 to S175 is performed repeatedly until available capacity that is equal to the acquired content size has been allocated within the manual storage capacity (YES at S175), or until available capacity that is equal to the acquired content size has been allocated within the automatically allocable capacity (YES at S177). Then, once the available capacity has been allocated (YES at S175, or YES at S177), the content data that corresponds to the header data is acquired from the PC 9 (S179). Then the acquired content data and the header data that is stored in the RAM 13 are stored into the content storage area 300 of the memory card 17 (S180). Then the data for the content item is added to the automatic content list (S181), and the processing returns to the automatic content acquisition processing.

For example, in a case like that in the explanatory figure 506 that is shown in FIG. 8, the automatic content is stored such that it overflows into the manual storage capacity, so if some of the automatic content is deleted, available capacity that is equal to the acquired content size may be allocated within the manual storage capacity. Accordingly, a determination of YES may be made at step S175, and the processing proceeds to step S179. Moreover, in a case like that in the explanatory figure 505 that is shown in FIG. 7, as well as in a case where the manual content is stored to fill the entire manual storage capacity, if some of the automatic content is deleted, available capacity that is equal to the acquired content size may be allocated within the automatically allocable capacity. Accordingly, a determination of YES may be made at step S177, and the processing proceeds to step S179.

Thus, in a case where the manually acquired content item to be stored cannot be stored, all of the automatic content items that satisfy the first condition are deleted first, and then all of the automatic content items that satisfy the second condition are deleted. Then, the automatic content item that satisfies the third condition is deleted until the available capacity to store the manually acquired content can be allocated. In a case where the automatically acquired content item to be stored cannot be stored, all of the automatic content items that satisfy the first condition are deleted first, and then all of the automatic content items that satisfy the second condition are deleted. Then, the automatic content item that satisfies the third condition is deleted until the available capacity to store the automatically acquired content can be allocated. Therefore, only a minimum amount of the automatic content may be deleted. Furthermore, when a content item is acquired by manual acquisition means, the available capacity may be allocated to the content item even if the manual content is not deleted.

Therefore, in a case where sufficient available capacity to allow the acquired automatic content item to be stored is not allocated, even if the already read automatic content items are deleted and the automatic content items for which the specified period of time has elapsed are deleted, the oldest automatic content item is deleted one by one until sufficient available capacity is allocated. Accordingly, the automatically acquired content can reliably be stored in the content storage area 300. For the manually acquired content, if the difference between the manual storage capacity and the manual content volume is greater than the size of the manually acquired content item, then, in a case where sufficient available capacity to allow the acquired automatic content item to be stored is not allocated even after the already read automatic content items are deleted and the automatic content items for which the specified period of time has elapsed are deleted, the oldest automatic content item is deleted one by one until sufficient available capacity is allocated. Accordingly, the manually acquired content can reliably be stored in the content storage area 300. Therefore, a problem in which a new automatic content item that is acquired by automatic acquisition means is not stored may not occur. Accordingly, the effect of automatic acquisition that makes it possible for the user to know passively that content has been updated or created may not be impaired. Further, content item that has not yet been used may not be deleted. Moreover, a comparatively new automatic content item can be kept without being deleted.

Furthermore, if the size of the manually acquired content item is greater than the difference between the manual storage capacity and the manual content volume, sufficient available capacity to store the manually acquired content item cannot be allocated, no matter how much of the automatic content is deleted. In such a case, a notification to that effect is issued to the user, and the automatic content is not deleted. Accordingly, it never happens that the automatic content is deleted when the manually acquired content cannot be stored. In addition, in a case where the size of the automatic manual content item is greater than the difference between the total capacity of the content storage area 300 and the total volume of the manual content, sufficient available capacity to store the manual automatic content item cannot be allocated, no matter how much of the automatic content is deleted. In this case, a notification to that effect is issued to the user, and the automatic content is not deleted. Accordingly, it never happens that the automatic content is deleted when the automatically acquired content cannot be stored. In other words, it never happens that the automatic content is deleted unnecessarily.

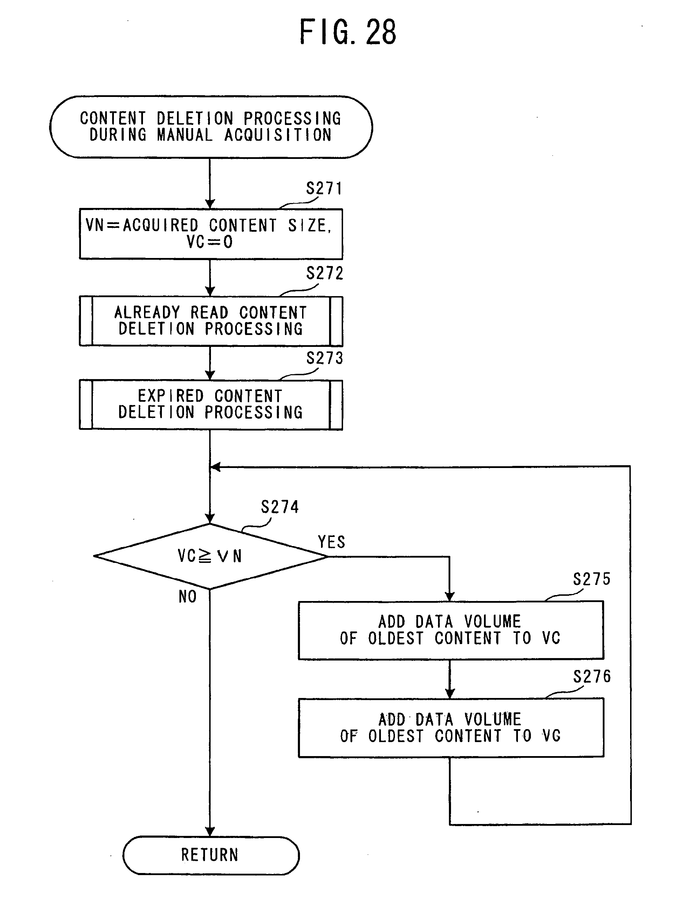

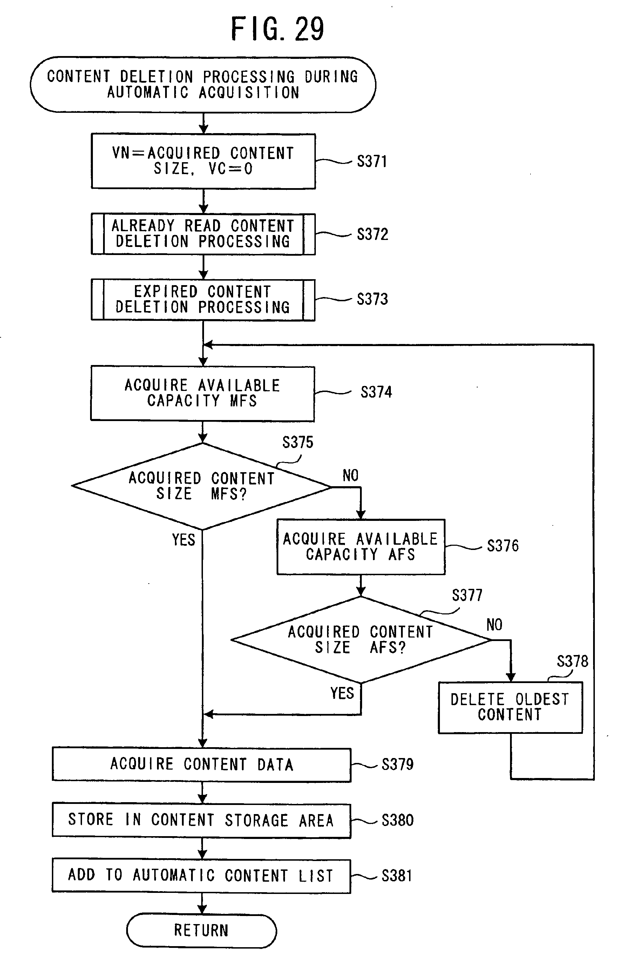

Next, the second embodiment will be explained with reference to FIGS. 28 and 29. In the second embodiment, in a case where the manually acquired content to be stored cannot be stored, all of the automatic content items that satisfy the first condition are deleted first, and then the automatic content item that satisfies the second condition is deleted until the available capacity to store the manually acquired content can be allocated. Then, the automatic content item that satisfies the third condition is deleted until the available capacity to store the manually acquired content can be allocated. In a case where the automatically acquired content to be stored cannot be stored, all of the automatic content items that satisfy the first condition are deleted first, and then the automatic content item that satisfies the second condition is deleted until the available capacity to store the automatically acquired content can be allocated. Then, the automatic content item that satisfies the third condition is deleted until the available capacity to store the automatically acquired content can be allocated.

Accordingly, the processing that are different from the first embodiment are the content deletion processing during manual acquisition and the content deletion processing during automatic acquisition, so only those processing will be explained.

First, the content deletion processing during manual acquisition will be explained with reference to the flowchart in FIG. 28. What is different from the first embodiment is the value of the reference volume VN. In the first embodiment, a value of infinity is given as the initial value (S71), then, after the already read content deletion processing (S72) and the expired content deletion processing (S73) are performed, the acquired content size is stored as the reference volume VN (S74), and the processing at steps S75 to S77 is performed. In other words, after the already read content items (the first condition) are all deleted and the expired content items (the second condition) are all deleted, the oldest content item (the third condition) is deleted until sufficient available capacity is allocated for storing the content of the acquired content size.

However, in the second embodiment, as initial values, the acquired content size is given to the reference volume VN, and zero (0) is given to the total deleted volume VC (S271), in the same manner as in the first embodiment. Then the already read content deletion processing is performed (S272). In the already read content deletion processing (refer to FIG. 24), the reference volume VN is not used, so in the same manner as in the first embodiment, all of the already read content items are deleted. An explanation of the details will be omitted here, with reference to the explanation in the first embodiment.

Next, the expired content deletion processing is performed (S273). In the expired content deletion processing, as shown in FIG. 25, when the total deleted volume VC is compared to the reference volume VN at step S124, the total deleted volume VC is compared to the acquired content size. Thus, while the total deleted volume VC is not equal to or greater than the acquired content size (NO at S124), the processing at steps S125 to S131 is performed. Accordingly, if the specified period of time has elapsed (YES at S126), the processing to delete the automatic content is performed (S127 to S130). Then, if the total deleted volume VC has become equal to or greater than the acquired content size (YES at S124), the expired content deletion processing is terminated. In other words, in a case where the expired content is deleted (the second condition), not all of the expired content items are deleted, as in the first embodiment, but the expired content item is deleted in such an amount that sufficient available capacity is allocated for storing the content of the acquired content size.

Next, in content deletion processing during manual acquisition in the second embodiment, the total deleted volume VC is compared to the value of the reference volume VN (the acquired content size) (S274). Then, in the processing at steps S275 to S276, the automatic content item that has the oldest date and time in the date/time created column in the automatic content list is deleted one by one at a time (the third condition).

Next, the content deletion processing during automatic acquisition in the second embodiment will be explained with reference to the flowchart in FIG. 29. What is different from the first embodiment is the value of the reference volume VN. In the first embodiment, a value of infinity is given as the initial value (S171), then, after the already read content deletion processing (S172) and the expired content deletion processing (S173) are performed, the acquired content size is stored as the reference volume VN (S74), and the processing at steps S174 to S181 is performed. In other words, after the already read content items (the first condition) are all deleted and the expired content items (the second condition) are all deleted, the oldest content item (the third condition) is deleted until sufficient available capacity is allocated for storing the content of the acquired content size.

However, in the second embodiment, as initial values, the acquired content size is given to the reference volume VN, and zero (0) is given to the total deleted volume VC (S371), in the same manner as in the first embodiment. Then the already read content deletion processing is performed (S372), but in the already read content deletion processing (refer to FIG. 24), the reference volume VN is not used, so in the same manner as in the first embodiment, all of the already read content items are deleted. An explanation of the details will be omitted here, with reference to the explanation in the first embodiment.

Next, the expired content deletion processing is performed (S373). In the expired content deletion processing, as shown in FIG. 25, when the total deleted volume VC is compared to the reference volume VN at step S124, the total deleted volume VC is compared to the acquired content size. Thus, for as long as the total deleted volume VC is not equal to or greater than the acquired content size (NO at S124), the processing at steps S125 to S131 is performed. Accordingly, if the specified period of time has elapsed (YES at S126), the processing to delete the automatic content is performed (S127 to S130). Then, if the total deleted volume VC has become equal to or greater than the acquired content size (YES at S124), the expired content deletion processing is terminated. In other words, in a case where the expired content is deleted (the second condition), not all of the expired content items are deleted, as in the first embodiment, but the expired content item is deleted in such an amount that sufficient available capacity is allocated for storing the content of the acquired content size.

Next, in the content deletion processing during automatic acquisition in the second embodiment, in the same manner as in the content deletion processing during automatic acquisition in the first embodiment, the available capacity MFS within the manual storage capacity is acquired (S374), and a determination is made as to whether the acquired content size is less than or equal to the available capacity MFS (S375). If it is less than or equal to the available capacity MFS (YES at S375), the content data that corresponds to the header data is acquired from the PC 9 (S380), and the acquired content data and the header data that is stored in the RAM 13 are stored into the content storage area 300 of the memory card 17 (S381). Then the processing returns to the automatic content acquisition processing.

Further, in a case where the acquired content size is not less than or equal to the available capacity MFS (NO at S375), the available capacity AFS within the automatically allocable capacity is acquired (S376), and a determination is made as to whether the acquired content size is less than or equal to the available capacity AFS (S377). If it is less than or equal to the available capacity AFS (YES at S377), the content data that corresponds to the header data is acquired from the PC 9 (S379), and the acquired content data and the header data that is stored in the RAM 13 are stored into the content storage area 300 of the memory card 17 (S380). Then, the data for the content item is added to the automatic content list (S381), and the processing returns to the automatic content acquisition processing.

Furthermore, in a case where the acquired content size is not less than or equal to the available capacity AFS (NO at S377), the data for which the date and time in the date/time created column in the automatic content list is the oldest is deleted (S378), and the processing then returns to step S374. Then the processing at steps S374 to S375 is performed repeatedly until available capacity that is equal to the acquired content size has been allocated within the manual storage capacity (YES at S375), or available capacity that is equal to the acquired content size has been allocated within the automatically allocable capacity (YES at S377). Then, once the available capacity has been allocated (YES at S375, or YES at S377), the content data that corresponds to the header data is acquired from the PC 9 (S379), and the acquired content data and the header data that is stored in the RAM 13 are stored into the content storage area 300 of the memory card 17 (S380). Then, the data for the content item is added to the automatic content list (S381), and the processing returns to the automatic content acquisition processing.

Thus, in a case where the manually acquired content item to be stored cannot be stored, all of the automatic content items that satisfy the first condition are deleted first, and then the automatic content item that satisfies the second condition is deleted until the available capacity to store the manually acquired content can be allocated. Then, the automatic content item that satisfies the third condition is deleted until the available capacity to store the manually acquired content can be allocated. In a case where the automatically acquired content to be stored cannot be stored, all of the automatic content items that satisfy the first condition are deleted first, and then the automatic content item that satisfies the second condition is deleted until the available capacity to store the manually acquired content can be allocated. Then, the automatic content item that satisfies the third condition is deleted until the available capacity to store the automatically acquired content can be allocated. Therefore, only a minimum amount of the automatic content may be deleted. Furthermore, when content is acquired by the manual acquisition means, the available capacity may be allocated even if the manual content is not deleted.

Therefore, in a case where sufficient available capacity to allow the acquired automatic content item to be stored is not allocated, even if the already read automatic content items are deleted and the automatic content items for which the specified period of time has elapsed are deleted, the oldest automatic content item is deleted one by one until sufficient available capacity is allocated. Accordingly, the automatically acquired content can reliably be stored in the content storage area 300. For the manually acquired content, if the difference between the manual storage capacity and the manual content volume is greater than the size of the manually acquired content item, then, in a case where sufficient available capacity to allow the acquired automatic content item to be stored is not allocated even after the already read automatic content items are deleted and the automatic content items for which the specified period of time has elapsed are deleted, the oldest automatic content item is deleted one by one until sufficient available capacity is allocated. Accordingly, the manually acquired content can reliably be stored in the content storage area 300. Therefore, a problem in which a new automatic content item that is acquired by the automatic acquisition means is not stored may not occur. Accordingly, the effect of automatic acquisition that makes it possible for the user to know passively that content has been updated or created may not be impaired.

Furthermore, if the size of the manually acquired content item is greater than the difference between the manual storage capacity and the manual content volume, sufficient available capacity to store the manually acquired content item cannot be allocated, no matter how much of the automatic content is deleted. Accordingly, in such a case, a notification to that effect is issued to the user, and the automatic content is not deleted. Accordingly, it never happens that the automatic content is deleted when the manually acquired content cannot be stored. In addition, in a case where the size of automatic manual content item is greater than the difference between the total capacity of the content storage area 300 and the total volume of the manual content, sufficient available capacity to store the manual automatic content item cannot be allocated, no matter how much of the automatic content is deleted. Accordingly, in this case, a notification to that effect is issued to the user, and the automatic content is not deleted. Accordingly, it never happens that the automatic content is deleted. In other words, it never happens that the automatic content is deleted unnecessarily when the automatically acquired content cannot be stored.

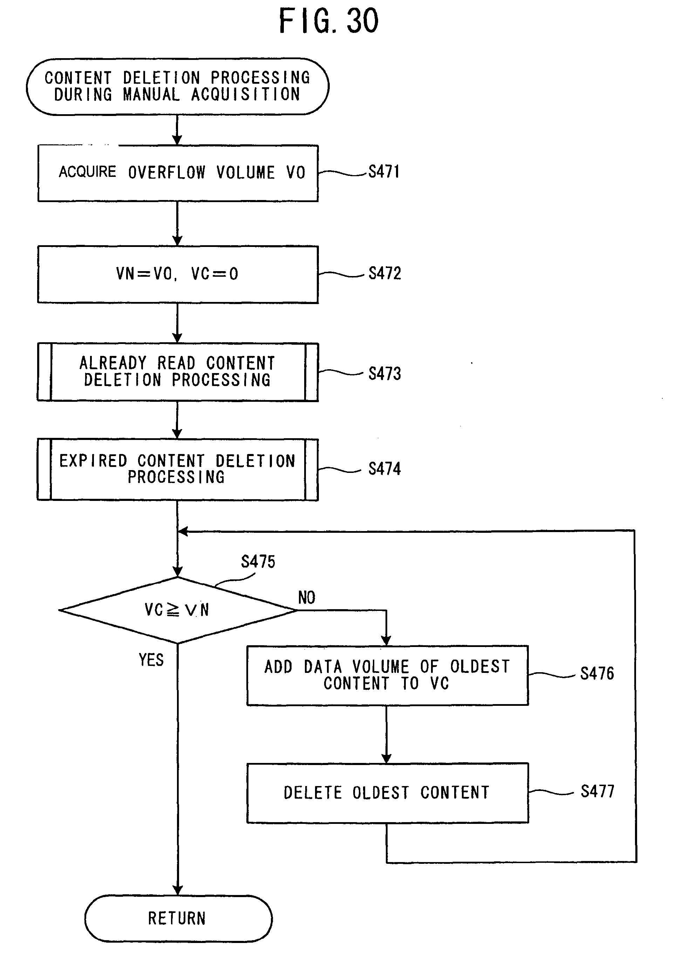

Next, the third embodiment will be explained with reference to FIG. 30. In the third embodiment, in a case where the manually acquired content item to be stored cannot be stored, in the same manner as in the first embodiment, all of the automatic content items that satisfy the first condition are deleted, and then all of the automatic content items that satisfy the second condition are deleted. Then, the automatic content item that satisfies the third condition is deleted until the available capacity to store the manually acquired content item can be allocated. Accordingly, the processing that is different from the first embodiment is the content deletion processing during manual acquisition, so only that processing will be explained.

What is different from the first embodiment is the value of the reference volume VN. In the first embodiment, a value of infinity is given as the initial value (S71), then after the already read content deletion processing (S72) and the expired content deletion processing (S73) are performed, the acquired content size is stored as the reference volume VN (S74), and the processing at steps S75 to S77 is performed. In other words, after the already read content items (the first condition) are all deleted and the expired content items (the second condition) are all deleted, the oldest content item (the third condition) is deleted until sufficient available capacity is allocated for storing the content of the acquired content size.

However, in the third embodiment, first, the overflow volume VO, which will be given as the initial value of the reference volume VN, is computed (S471). This is the volume of the automatic content that is stored in excess of the automatically allocable capacity. Then, the overflow volume VO is given as the initial value of the reference volume VN, and the initial value zero (0) is given as the total deleted volume VC (S472), in the same manner as in the first embodiment. Then the already read content deletion processing is performed (S473). In the already read content deletion processing (refer to FIG. 24), the reference volume VN is not used, so in the same manner as in the first embodiment, all of the already read content items are deleted. An explanation of the details will be omitted here, with reference to the explanation in the first embodiment.

Next, the expired content deletion processing is performed (S474). In the expired content deletion processing, as shown in FIG. 25, when the total deleted volume VC is compared to the reference volume VN at step S124, the total deleted volume VC is compared to the acquired content size, and while the total deleted volume VC is not equal to or greater than the acquired content size (NO at S124), the processing at steps S125 to S131 is performed. Accordingly, if the specified period of time has elapsed (YES at S126), the processing to delete the automatic content is performed (S127 to S130). Then, if the total deleted volume VC has become equal to or greater than the acquired content size (YES at S124), the expired content deletion processing is terminated. In other words, in a case where the expired content is deleted (the second condition), not all of the expired content items are deleted, as in the first embodiment, but only as much of the expired content will be deleted as will eliminate the overflow volume VO.

Next, in the content deletion processing during manual acquisition in the third embodiment, the total deleted volume VC is compared to the value of the reference volume VN (the acquired content size) (S475), and in the processing at steps S476, S477, the automatic content item that has the oldest date and time in the date/time created column in the automatic content list is deleted one by one at a time (the third condition).

Thus, in a case where the manually acquired content item to be stored cannot be stored, all of the automatic content items that satisfy the first condition are deleted first. Then only as much of the automatic content that satisfies the second condition is deleted as will eliminate the overflow volume VO, and only as much of the automatic content that satisfies the third condition is deleted as will eliminate the overflow volume VO. Therefore, if the difference between the manual storage capacity and the manual content volume is greater than the size of the manually acquired content, the already read automatic content items are deleted first, and then the automatic content item for which the specified period of time has elapsed is deleted. In a case where sufficient available capacity to allow the acquired automatic content item to be stored is still not allocated even so, the oldest automatic content is deleted one by one until the automatic content no longer exceeds the automatically allocable capacity. Accordingly, the manually acquired content item can reliably be stored in the content storage area 300. Therefore, a problem in which a new automatic content item that is acquired by the automatic acquisition means is not stored may not occur. Furthermore, because only as much of the automatic content as equals the automatically allocable capacity is deleted according to the second condition and the third condition in order to store the content item acquired by the automatic acquisition means, a more appropriate amount of available capacity can be allocated than when all of the automatic content items are deleted and when only as much is deleted as equals the volume of the acquired content. Moreover, when the content item is acquired by the manual acquisition means, available capacity can be allocated even if the manual content is not deleted. Accordingly, the effect of automatic acquisition that makes it possible for the user to know passively that content has been updated and created may not be impaired.

Furthermore, if the size of the manually acquired content is greater than the difference between the manual storage capacity and the manual content volume, sufficient available capacity to store the manually acquired content item cannot be allocated, no matter how much of the automatic content is deleted. Accordingly, in such a case, a notification to that effect is issued to the user, and the automatic content is not deleted. Accordingly, it never happens that the automatic content is deleted when the manually acquired content cannot be stored. In addition, in a case where the size of automatic manual content is greater than the difference between the total capacity of the content storage area 300 and the total volume of the manual content, sufficient available capacity to store the manual automatic content cannot be allocated, no matter how much of the automatic content is deleted. Accordingly, in this case, a notification to that effect is issued to the user, and the automatic content is not deleted. Accordingly, it never happens that the automatic content is deleted when the automatically acquired content cannot be stored. In other words, it never happens that the automatic content is deleted unnecessarily.

Note that the content management apparatus is not limited to the embodiments described above and that various types of modifications can obviously be made without departing from the scope of the present invention.

Note that the first embodiment to the third embodiment have been explained using the content display device 1 that displays the content and the PC 9 that acquires the content as examples. However, text data and image data have been used as the content items that the user views by displaying them in the display portion 10, but moving image data may also be used. Further, the content is not limited to content that is viewed, and may also be audio content that the user hears, a combination of video and audio data, such as a still image and audio, and a moving image and audio, that the user views and hears, as well as a game and the like.

Furthermore, the content display device 1, which is a portable dedicated terminal, and the PC 9 have been explained as examples, but the content management apparatus is not limited to this configuration. The content display device 1 may also be equipped with a function that can be connected to the Internet 5 and a LAN, and the manual acquisition means and the automatic acquisition means may also be provided in the content display device 1. All of the means may also be provided in a general purpose device such as a notebook type personal computer or a PDA that can be connected to a network, instead of in a dedicated terminal device. The content display device is also not limited to being a portable terminal and may also be a desktop type personal computer, a television, or the like that can connect to a network.

Moreover, in the first embodiment to the third embodiment, a content item is deleted in a case where it satisfies a condition, but what is called a protection function may also be provided such that the content item is not deleted even if it satisfies the condition. For example, a protection flag may be provided in the header data, and the present invention may be configured such that in a case where the protection flag is ON, the content item is not deleted even if it satisfies the condition. Note that the setting of the protection flag may be configured such that the flag is set in the content display device 1 by a user operation, and a setting function may also be provided in the PC 9 application.

In addition, in the first embodiment to the third embodiment, the content item for which one week has elapsed is deleted, but the elapsed period is not limited to one week. The user may also be allowed to designate the period in one of the content display device 1 and the PC 9 application. The period may also be designated separately for each of the content items and stored in the header data, and when the deletion determination is made, the determination as to whether the content item will be deleted may be made by reading the period from the header data.

Furthermore, in the first embodiment to the third embodiment described above, the automatic content may be stored such that it exceeds the automatically allocable capacity, but the present invention may also be configured such that the automatic content may not be stored if it exceeds the automatically allocable capacity. In such a case, in the content deletion processing during automatic acquisition, the processing that compares the acquired content size to the available capacity MFS within the manual storage capacity may be omitted. In the first embodiment, this is the processing steps at S174, S175 in FIG. 27, and in the second embodiment, it is the processing at steps S374, S375 in FIG. 29. In such a case, the automatic storage capacity where the automatic content can be stored may be fixed, so the capacity for storing the manual content may always exist.

Moreover, in the first embodiment to the third embodiment described above, the same first condition (the already read content), second condition (the elapsing of the specified period), and third condition (the old content) are used for a first deletion condition for deleting the automatic content when the automatically acquired content is stored (in the automatic content acquisition processing) and for a second deletion condition for deleting the automatic content when the manually acquired content is stored (in the manual content acquisition processing). However, it may also be acceptable to not necessarily use the same conditions, and a combination of the first condition, the second condition, and the third condition may also be used. For example, the first condition and the second condition may be used when the automatically acquired content is stored, and the third condition may be used when the manually acquired content is stored. Further, in the first embodiment to the third embodiment described above, the determinations for the first condition, the second condition, and the third condition are made, and the automatic content is deleted, in that order, but the order in which the conditions are determined is not limited to this example. Moreover, all of the automatic content items that satisfy the first condition are deleted, but even for the first condition, an automatic content item may be deleted only until the available capacity becomes equal to the acquired content size, or for only the overflow volume VO to be deleted.

In addition, in the first embodiment to the third embodiment described above, the acquired content in the PC 9 is stored into the memory card 17 of the content display device 1 by implementing content acquisition means that is shown in FIGS. 21 to 27 in the content display device 1 when the content display device 1 is connected to the PC 9, but the content may also be stored in the EEPROM 14 of the content display device 1.

Further, memory card connection means may be provided to the PC 9, and the content may be stored in a memory card that is directly connected to the PC 9. In such a case, the content acquisition processing that is shown in FIGS. 21 to 27 may be performed by the CPU 901 of the PC 9 when the content is acquired from another device or from another storage means of the PC 9.

The content may also be stored in a content storage area 921 of a hard disk 920. In such a case, the storage capacity of the content storage area 921 may be determined in advance to be one of the capacity of the memory card that can be connected to the content display device that uses the stored content and the capacity of one of the EEPROM that is provided in the content display device and a hard disk. Then, in the PC 9, the content acquisition processing that is shown in FIGS. 21 to 27 may be performed by the CPU 901 of the PC 9 when the content is designated by the user (the manual acquisition means) and when the content is acquired in accordance with a predetermined condition (the automatic acquisition means).

In the manner described above, in a content management apparatus of the present disclosure, manual acquisition means may designate a content item that is stored in another apparatus and acquire the designated content item by receiving it from the other apparatus via receiving means, or may designate and acquire a content item that is stored in storage means of the content management apparatus other than the content storage means. Automatic acquisition means may transmit to another apparatus, via transmission means, request information that requests transmission of a content item, and may receive via the receiving means and acquire at least one of the content item that satisfies a specified acquisition condition and that is transmitted from the apparatus in response to the request information and a content item that is transmitted autonomously from the other apparatus. The automatic acquisition means may acquire a created content item that is created in the content management apparatus and that satisfies the specified acquisition condition. Then, in a case where the content acquired by the manual acquisition means is to be stored into the content storage means, storage capacity determination means determines whether a volume that is obtained by summing a volume of the manual content, which is at least one manual content item that has already been acquired by the manual acquisition means and stored in the content storage means, and a volume of the acquired content item exceeds a maximum manual storage capacity, which is a capacity that permits storage of the manual content in the content storage means. Manual content storage control means may store the acquired content item , as the manual content item, into the content storage means only in a case where it is determined by the storage capacity determination means that the maximum manual storage capacity will not be exceeded. Message output control means may, in a case where it is determined by the storage capacity determination means that the maximum manual storage capacity will be exceeded, output a message that requests deletion of the manual content that is stored in the content storage means. In other words, in the storing of the content item that is acquired by the manual acquisition means, the message that requests the deletion of the manual content may be displayed in a case where an attempt is made to store the content item in excess of the maximum manual storage capacity, and the manual content is stored only in a case where doing so will not exceed the maximum manual storage capacity. Therefore, the capacity for storing the automatic content may always be ensured. In contrast, automatic storage determination means may determine whether or not the content item that is acquired by the automatic acquisition means can be stored in the content storage means. Automatic content storage control means may store the content item that is acquired by the automatic acquisition means, as an automatic item of the automatic content, into the content storage means, in a case where it is determined by the automatic storage determination means that the content item can be stored. Further, first automatic deletion and storage control means may, in a case where it is determined by the automatic storage determination means that the content item cannot be stored, delete at least one automatic content item that is stored in the content storage means in accordance with the first deletion condition, and then store the content item that is acquired by the automatic acquisition means into the content storage means. Therefore, even if the storage capacity for storing the acquired content item does not exist when the automatic content item is acquired, an unnecessary automatic content item that has already been stored may be deleted in accordance with the first deletion condition, and the newly acquired automatic content item may be stored, so a problem in which a new automatic content item that is acquired by automatic acquisition means is not stored may not occur.

Further, in the content management apparatus of the present disclosure, in a case where a volume that is obtained by summing a volume of the automatic content stored in the content storage means and a volume of the content item that has been acquired by the automatic acquisition means exceeds an automatic storage capacity, which is a capacity remaining after the maximum manual storage capacity is subtracted from a total capacity of the content storage means, the automatic storage determination means may determine that the acquired content item cannot be stored. Thus, because the automatic storage capacity that can store the automatic content is fixed, the capacity for storing the manual content may always exist.

Furthermore, in the content management apparatus of the present disclosure, in a case where an available capacity in the content storage means is less than a volume of the content item acquired by the automatic acquisition means, the automatic storage determination means may determine that the acquired content item cannot be stored. Therefore, the content item acquired by the automatic acquisition means may be stored into the content storage means without considering the capacity for the content to be acquired by the manual acquisition means. Thus, even when only a volume that is less than the maximum manual storage capacity is used by the manual content, unused capacity within the maximum manual storage capacity may not go to waste.

Additionally, in the content management apparatus of the present disclosure, the first deletion condition may be that the at least on automatic content item has been used. Therefore, a content item that has not yet been used may not be deleted.

In the content management apparatus of the present disclosure, the first deletion condition may be also that a specified period of time has elapsed since the at least one automatic content was stored into the content storage means. Therefore, a comparatively old automatic content item for which the specified period of time has elapsed may be deleted, while a comparatively new automatic content item may be kept without being deleted.

In the content management apparatus of the present disclosure, the first deletion condition may also be that the at least one automatic content item falls within a specified number of items of the automatic content that is stored in the content storage means, in order by date and time stored, starting with the item whose date and time stored is the oldest. Therefore, deletions may be made from the automatic content that is stored in the content storage means.

Further, in the content management apparatus of the present disclosure, the first automatic deletion and storage control means may delete all of the automatic content items that satisfy the first deletion condition. Therefore, the automatic content may be deleted to allocate an available capacity without regard to the volume of the acquired content item.

Furthermore, in the content management apparatus of the present disclosure, the first automatic deletion and storage control means may delete the at least one automatic content item that satisfies the first deletion condition such that the available capacity in the content storage means becomes at least equal to the volume of the content item acquired by the automatic acquisition means. Therefore, only as much of the automatic content as is sufficient for storing the acquired content item may be deleted to allocate the available capacity, so only a minimum amount of the automatic content is deleted.

In addition, in the content management apparatus of the present disclosure, the first automatic deletion and storage control means may delete the at least one automatic content that satisfies the first deletion condition such that the volume of the automatic content stored in the content storage means becomes no greater than an automatic storage capacity, which is a capacity remaining after the maximum manual storage capacity is subtracted from the total capacity of the content storage means. Therefore, only as much of the automatic content may be deleted as the automatic storage capacity for storing the content item acquired by the automatic acquisition means, so a more appropriate amount of available capacity may be allocated than when all of the automatic content items are deleted or when only as much is deleted as equals the volume of the acquired content item.

Moreover, in the content management apparatus of the present disclosure, when the content item acquired by the manual acquisition means is to be stored into the content storage means, in a case where an available capacity in the content storage means is less than a volume of the acquired content item, and the automatic content is stored in excess of an automatic storage capacity, which is a capacity remaining after the maximum manual storage capacity is subtracted from the total capacity of the content storage means, second automatic deletion and storage control means may delete the at least one automatic content item stored in the content storage means in accordance with the second deletion condition, and may store the content item acquired by the manual acquisition means into the content storage means. Therefore, when the content item is acquired by the manual acquisition means, the available capacity can be allocated even if the manual content is not deleted.

Further, in the content management apparatus of the present disclosure, the second deletion condition may be that use of the at least one automatic content item has been finished. Therefore, a content item that has not yet been used may not deleted.

In the content management apparatus of the present disclosure, the second deletion condition may also be that a specified period of time has elapsed since the at least one automatic content item was stored in the content storage means. Therefore, a comparatively old automatic content item for which the specified period of time has elapsed may be deleted, while a comparatively new automatic content may be kept without being deleted.

In the content management apparatus of the present disclosure, the second deletion condition may be that the at least one automatic content item falls within a specified number of items of the automatic content that is stored in the content storage means, in order by a date and time stored, starting with the content item whose date and time stored is the oldest. Therefore, deletions may be made from the automatic content that is stored in the content storage means.

In the content management apparatus of the present disclosure, the second automatic deletion and storage control means may delete all of the automatic content items that satisfy the second deletion condition.

Furthermore, in the content management apparatus of the present disclosure, the second automatic deletion and storage control means may delete the at least one automatic content that satisfies the second deletion condition such that an available capacity in the content storage means becomes at least equal to a volume of the content item acquired by the manual acquisition means.

In addition, in the content management apparatus of the present disclosure, the second automatic deletion and storage control means may delete the at least one automatic content item that satisfies the second deletion condition such that the volume of the automatic content that is stored in the content storage means becomes no greater than the automatic storage capacity. Because the automatic content that overflows the automatic storage capacity may be deleted, the maximum manual storage capacity that permits storage of the manual content may be allocated for the available capacity and the manual content.

Moreover, in the content management apparatus of the present disclosure, the specified acquisition condition may be that the information in the content item has been changed. Therefore, the content item may be acquired automatically when the information in the content item has been changed, so the user may be able to acquire the most recent information in the content item.

Further, because the content storage means is provided in the content management apparatus of the present disclosure, when a new content item acquired by the automatic acquisition means is stored into the content storage means provided in the apparatus itself, a problem that the content item is not stored may not occur.

## Claims

1. A content management apparatus that connects to another apparatus storing content items, that is provided with transmission means for transmitting information to the other apparatus and receiving means for receiving information from the other apparatus, that acquires a content item from the other apparatus, and that stores the content item into content storage means for storing content items, the content management apparatus **characterized by** comprising:
manual acquisition means for designating a content item stored in the other apparatus and acquiring the designated content item by receiving the designated content item from the other apparatus via the receiving means, or designating and acquiring a content item stored in storage means of the content management apparatus other than the content storage means;
automatic acquisition means for acquiring, by receiving via the receiving means, at least one of a content item that satisfies a specified acquisition condition and that is transmitted from the other apparatus in response to request information requesting transmission of the content item and a content item that is transmitted autonomously from the other apparatus, or acquiring a created content item that is created in the content management apparatus and that satisfies the specified acquisition condition;
storage capacity determination means for, in a case where the content item acquired by the manual acquisition means is to be stored into the content storage means, determining whether a volume that is obtained by summing a volume of manual content and a volume of the acquired content item exceeds a maximum manual storage capacity, the manual content being at least one manual content item that has already been acquired by the manual acquisition means and stored in the content storage means, the maximum manual storage capacity being a capacity that permits storage of the manual content in the content storage means;
manual content storage control means for storing the acquired content item, as the manual content item, into the content storage means only in a case where it is determined by the storage capacity determination means that the maximum manual storage capacity will not be exceeded;
message output control means for, in a case where it is determined by the storage capacity determination means that the maximum manual storage capacity will be exceeded, outputting a message that requests deletion of the manual content stored in the content storage means;
automatic storage determination means for determining whether or not the content item acquired by the automatic acquisition means can be stored into the content storage means;
automatic content storage control means for, in a case where it is determined by the automatic storage determination means that the content item can be stored, storing the content item acquired by the automatic acquisition means, as an automatic content item of automatic content, into the content storage means; and
first automatic deletion and storage control means for, in a case where it is determined by the automatic storage determination means that the content item cannot be stored, deleting at least one automatic content item stored in the content storage means in accordance with a first deletion condition, and storing the content item acquired by the automatic acquisition means into the content storage means.

2. The content management apparatus according to claim 1, wherein the automatic storage determination means determines that the acquired content item cannot be stored in a case where a volume that is obtained by summing a volume of the automatic content stored in the content storage means and a volume of the content item acquired by the automatic acquisition means exceeds an automatic storage capacity, the automatic storage capacity being a capacity remaining after the maximum manual storage capacity is subtracted from a total capacity of the content storage means.

3. The content management apparatus according to claim 1, wherein the automatic storage determination means determines that the acquired content item cannot be stored in a case where an available capacity in the content storage means is less than a volume of the content item acquired by the automatic acquisition means.

4. The content management apparatus according to any one of claims 1 to 3, wherein the first deletion condition is that the at least one automatic content item has been used.

5. The content management apparatus according to any one of claims 1 to 4, wherein the first deletion condition is that a specified period of time has elapsed since the at least one automatic content item was stored into the content storage means.

6. The content management apparatus according to any one of claims 1 to 5, wherein the first deletion condition is that the at least one automatic content item falls within a specified number of items of the automatic content stored in the content storage means, in order by a date and time stored, starting with the automatic content item whose date and time stored is the oldest.

7. The content management apparatus according to any one of claims 1 to 6, wherein the first automatic deletion and storage control means deletes all of the automatic content items that satisfy the first deletion condition.

8. The content management apparatus according to any one of claims 1 to 6, wherein the first automatic deletion and storage control means deletes the at least one automatic content item that satisfies the first deletion condition such that an available capacity in the content storage means becomes at least equal to a volume of the content item acquired by the automatic acquisition means.

9. The content management apparatus according to any one of claim 1 and claims 3 to 6, wherein the first automatic deletion and storage control means deletes the at least one automatic content item that satisfies the first deletion condition such that a volume of the automatic content stored in the content storage means becomes no greater than an automatic storage capacity, the automatic storage capacity being a capacity remaining after the maximum manual storage capacity is subtracted from the total capacity of the content storage means.

10. The content management apparatus according to any one of claims 3 to 9, **characterized by** further comprising second automatic deletion and storage control means for, in a case where the content item acquired by the manual acquisition means is to be stored into the content storage means, an available capacity in the content storage means is less than a volume of the acquired content item, and the automatic content is stored in excess of an automatic storage capacity, deleting the at least one automatic content item stored in the content storage means in accordance with a second deletion condition, and storing the content item acquired by the automatic acquisition means into the content storage means, the automatic storage capacity being a capacity remaining after the maximum manual storage capacity is subtracted from the total capacity of the content storage means.

11. The content management apparatus according to claim 10, wherein the second deletion condition is that the at least one automatic content item has been used.

12. The content management apparatus according to either one of claims 10 and 11, wherein the second deletion condition is that a specified period of time has elapsed since the at least one automatic content item was stored into the content storage means.

13. The content management apparatus according to any one of claims 10 to 12, wherein the second deletion condition is that the at least one automatic content item falls within a specified number of items of the automatic content stored in the content storage means, in order by a date and time stored, starting with the content item whose date and time stored is the oldest.

14. The content management apparatus according to any one of claims 10 to 13, wherein the second automatic deletion and storage control means deletes all of the automatic content items that satisfy the second deletion condition.

15. The content management apparatus according to any one of claims 10 to 13, wherein the second automatic deletion and storage control means deletes the at least one automatic content item that satisfies the second deletion condition such that the available capacity in the content storage means becomes at least equal to the volume of the content item acquired by the manual acquisition means.

16. The content management apparatus according to any one of claims 10 to 13, wherein the second automatic deletion and storage control means deletes the at least one automatic content item that satisfies the second deletion condition such that a volume of the automatic content stored in the content storage means becomes no greater than the automatic storage capacity.

17. The content management apparatus according to any one of claims 1 to 16, wherein the specified acquisition condition is that information in the content item has been changed.

18. The content management apparatus according to any one of claims 1 to 17, wherein the content management apparatus includes the content storage means.

19. A content management program that causes a computer to function as each type of processing means of the content management apparatus according to any one of claims 1 to 18.
